(19) Europäisches Patentamt
European Patent Office
Office européen des brevets

(11) **EP 2 977 985 A1**

(12) **EUROPEAN PATENT APPLICATION**
published in accordance with Art. 153(4) EPC

(43) Date of publication:
**27.01.2016 Bulletin 2016/04**

(21) Application number: **14767360.2**

(22) Date of filing: **10.03.2014**

(51) Int Cl.:
***G10L 21/02*** (2013.01)  ***H04R 3/00*** (2006.01)

(86) International application number:
**PCT/CN2014/073124**

(87) International publication number:
**WO 2014/146547 (25.09.2014 Gazette 2014/39)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **21.03.2013 CN 201310092267**

(71) Applicant: **Huawei Technologies Co., Ltd.**
**Longgang District**
**Shenzhen, Guangdong 518129 (CN)**

(72) Inventors:
• **ZHANG, Deming**
**Shenzhen**
**Guangdong 518129 (CN)**
• **LIU, Yuanyuan**
**Shenzhen**
**Guangdong 518129 (CN)**
• **LONG, Zhiming**
**Shenzhen**
**Guangdong 518129 (CN)**

(74) Representative: **Kreuz, Georg Maria et al**
**Huawei Technologies Duesseldorf GmbH**
**Riesstrasse 8**
**80992 München (DE)**

(54) **SOUND SIGNAL PROCESSING METHOD AND DEVICE**

(57)    A sound signal processing method includes: receiving direction indication information input by a user and used for indicating a target direction (S110); and adjusting, according to the direction indication information, a beam direction of a sound signal processing array to a state corresponding to the target direction (S120). A sound signal processing device includes: a receiving module (810), configured to receive direction indication information input by a user and used for indicating a target direction; and an adjustment module (820), configured to adjust, according to the direction indication information, a beam direction of a sound signal processing array to a state corresponding to the target direction. According to the sound signal processing method and device, a beam direction of a sound signal processing array is adjusted according to direction indication information provided by a user and used for indicating a target direction, so that a sound signal can still be accurately processed in a noisy environment, thereby achieving an enhancement effect for the processed sound signal.

Receive direction indication information input by a user and used for indicating a target direction — S110

Adjust, according to the direction indication information, a beam direction of a sound signal processing array to a state corresponding to the target direction — S120

FIG. 1

## Description

### TECHNICAL FIELD

Embodiments of the present invention relate to communications technologies, and in particular, to a sound signal processing method and device.

### BACKGROUND

With the universal use of various terminal devices such as mobile phones or computers in scenarios such as conference communication or sound recording, collecting a sound signal by configuring a microphone array in a terminal device or broadcasting a sound signal by configuring a loudspeaker array in a terminal device has become a hotspot in research and application.

Using a microphone array configured in a terminal device as an example, the terminal device may calculate sound source space information according to a factor such as intensity of a sound signal collected by each microphone in the microphone array and a disposed position of each microphone, then estimate a position of a main sound source by using the sound source space information, and perform adaptive adjustment on the position of the main sound source, so as to adjust a collection direction to collect a sound beam of the main sound source. Finally, only a sound signal of the main sound source is reserved or enhanced, so that sound of the main sound source can be more clearly collected or transmitted.

In the prior art, if a terminal device is used to collect sound in a noisy environment, the terminal device cannot accurately estimate a position of a main sound source; if the terminal device is used to broadcast sound, the terminal device cannot learn a direction to which a sound signal needs to be mainly broadcast. Therefore, the terminal device cannot accurately process the sound signal, and cannot enhance the processed sound signal in a main sound source direction or a main broadcast direction.

### SUMMARY

Embodiments of the present invention provide a sound signal processing method and device. According to a first aspect, a sound signal processing method provided by an embodiment of the present invention includes: receiving direction indication information input by a user and used for indicating a target direction; and adjusting, according to the direction indication information, a beam direction of a sound signal processing array to a state corresponding to the target direction.

In a first possible implementation manner of the first aspect, the adjusting, according to the direction indication information, a beam direction of a sound signal processing array to a state corresponding to the target direction includes: determining, according to the direction indication information, a signal delay corresponding to each sound signal processing unit in the sound signal processing array; and performing, according to each signal delay, delayed processing on a sound signal that needs to be processed by the sound signal processing unit corresponding to the signal delay, to acquire the sound signal on which the delayed processing has been performed, and transmitting the sound signal on which the delayed processing has been performed to a beamformer, so as to adjust the beam direction of the sound signal processing array to the state corresponding to the target direction.

With reference to the first possible implementation manner of the first aspect, in a second possible implementation manner of the first aspect, the determining, according to the direction indication information, a signal delay corresponding to each sound signal processing unit in the sound signal processing array specifically includes: acquiring, according to the direction indication information by using the following formula, a signal delay $\tau_n(\beta)$ corresponding to each sound processing unit n in the sound signal processing array:

$$\tau_n(\beta) = \frac{d_n \cos\beta}{c} \times f_s$$

where $d_n$ denotes a distance between one sound signal processing unit n in sound signal processing units that are linearly arranged and included in the sound signal processing array and the center of the sound signal processing array, $\beta$ denotes an approximate included angle between the target direction, to which the center of the sound signal processing array points, indicated by the direction indication information and a reference coordinate, c denotes a speed of sound, and $f_s$ denotes a sound signal sampling frequency of the sound signal processing array; and correspondingly, the performing, according to each signal delay, delayed processing on a sound signal that needs to be processed by the sound signal processing unit corresponding to the signal delay, to acquire the sound signal on which the delayed processing has been performed specifically includes: performing, according to the signal delay $\tau_n(\beta)$ corresponding to the sound signal processing unit n, delayed processing on a sound signal collected by the sound signal processing unit n, where the sound signal on which the delayed processing has been performed may be expressed as:

$$Y_n\left(\omega,\beta\right)=\overline{Y}_n\left(\omega,\beta\right)*e^{-j\omega\tau_n(\beta)}$$

where $\overline{Y}_n(\omega,\beta)$ is a frequency domain signal obtained after time-frequency conversion is performed on the sound signal collected by the sound signal processing unit n, and $\omega$ denotes a frequency index.

With reference to the first possible implementation manner of the first aspect, in a third possible implementation manner of the first aspect, the determining, according to the direction indication information, a signal delay corresponding to each sound signal processing unit in the sound signal processing array specifically includes: acquiring, according to the direction indication information by using the following formula, a set T or $\psi$ of the signal delays corresponding to the sound processing units in the sound signal processing array:

$$T=\left[T_1,T_2\ldots,T_M\right]=\left[\frac{r_1-r_a}{c}f_a,\frac{r_2-r_a}{c}f_a\ldots,\frac{r_M-r_a}{c}f_a\right],$$

or

$$\psi=\left[\psi_1,\psi_2\ldots,\psi_M\right]=\left[e^{-j\frac{2\pi f_a\left(r_1-r_a\right)}{c}},e^{-j\frac{2\pi f_a\left(r_2-r_a\right)}{c}}\ldots,e^{-j\frac{2\pi f_a\left(r_M-r_a\right)}{c}}\right]$$

where $T_M$ denotes a signal delay corresponding to the $M^{th}$ sound processing unit in the sound processing array, $r_m$ denotes a distance from a target A in the target direction indicated by the direction indication information to the $m^{th}$ sound processing unit, $f_a$ denotes a sound signal sampling frequency of the sound processing array, and c denotes a speed of sound; $r_m$ is acquired by using the following formula:

$$r_m=\sqrt{r_a^2+b^2-2br_a\sin\theta\cos a_m},m=1,2\ldots,M$$

where $r_a$ denotes a distance between the target A in the target direction indicated by the direction indication information and an origin of a reference coordinate, the origin of the reference coordinate is a circle center of the sound processing array that is annularly arranged, b denotes a radius of the sound processing array that is annularly and uniformly arranged, and $a_m$ denotes an included angle between a connection line between a projection A' of the target A on a plane on which the sound processing array is located and the origin and a connection line between the $m^{th}$ sound processing unit and the origin; and $a_m$ is acquired by using the following formula:

$$a_m=a_1+\frac{2\pi\left(m-1\right)}{M},m=1,2\ldots,M$$

where $a_1$ denotes an included angle between the connection line between the projection A' of the target A on the plane on which the sound processing array is located and the origin and a connection line between the first sound processing unit and the origin; and correspondingly, the performing, according to each signal delay, delayed processing on a sound signal that needs to be processed by the sound signal processing unit corresponding to the signal delay, to acquire the sound signal on which the delayed processing has been performed specifically includes: performing, according to a signal delay $T_M$ or $\psi_M$ in the set T or $\psi$ of the signal delays, delayed processing on a corresponding sound signal collected by the sound signal processing unit M, where the sound signal on which the delayed processing has been performed may be expressed as:

$$Y_M\left(\omega,\beta\right)=\overline{Y}_M\left(\omega,\beta\right)*e^{-j\omega T_M},$$

or

$$Y_M\left(\omega,\beta\right)=\overline{Y}_M\left(\omega,\beta\right)*e^{-j\omega\psi_M}$$

where $\overline{Y}_n(\omega,\beta)$ is a frequency domain signal obtained after time-frequency conversion is performed on a sound signal collected by a sound signal processing unit n, and $\omega$ denotes a frequency index.

With reference to any one of the first to the third possible implementation manners of the first aspect, in a fourth possible implementation manner of the first aspect, the sound signal processing array includes a sound signal collection array, where the sound signal collection array includes multiple sound signal collection units; correspondingly, the determining, according to the direction indication information, a signal delay corresponding to each sound signal processing unit in the sound signal processing array includes: determining, according to the direction indication information, a signal delay corresponding to each sound signal collection unit in the sound signal collection array; and correspondingly, the performing, according to each signal delay, delayed processing on a sound signal that needs to be processed by the sound signal processing unit corresponding to the signal delay includes: performing, according to each signal delay, delayed processing on a sound signal collected by the sound signal collection unit corresponding to the signal delay; or, the sound signal processing array includes a sound signal sending array, where the sound signal sending array includes multiple sound signal sending units; correspondingly, the determining, according to the direction indication information, a signal delay corresponding to each sound signal processing unit in the sound signal processing array includes: determining, according to the direction indication information, a signal delay corresponding to each sound signal sending unit in the sound signal sending array; and correspondingly, the performing, according to each signal delay, delayed processing on a sound signal that needs to be processed by the sound signal processing unit corresponding to the signal delay includes: performing, according to each signal delay, delayed processing on a sound signal sent by the sound signal sending unit corresponding to the signal delay.

With reference to the first aspect or any one of the first to the third possible implementation manners of the first aspect, in a fifth possible implementation manner of the first aspect, before the receiving direction indication information input by a user and used for indicating a target direction, the method further includes: receiving a control mode display instruction input by the user; acquiring and displaying multiple available control modes according to the control mode display instruction, where each control mode in the multiple control modes corresponds to at least one direction indication information input manner; and receiving a control mode selection instruction for the multiple control modes that is sent by the user, and enabling a control mode selected by the user, where the receiving direction indication information input by a user and used for indicating a target direction includes: receiving the direction indication information that is input by the user in a direction indication information input manner corresponding to the selected control mode and that is used for indicating the target direction.

With reference to the fifth possible implementation manner of the first aspect, in a sixth possible implementation manner of the first aspect, the multiple control modes include a user autonomous control mode, where the user autonomous control mode is a mode in which the user is allowed to autonomously input the direction indication information; and if the control mode selected by the user is the user autonomous control mode, the receiving the direction indication information that is input by the user in a direction indication information input manner corresponding to the selected control mode and that is used for indicating the target direction includes: receiving a voice signal that is input by the user in a voice input manner, and parsing the voice signal to acquire direction indication information included in the voice signal; or, receiving track information that is input by means of sliding by the user on a touch screen in a touch input manner, parsing a target direction indicated by the track information, and generating direction indication information used for indicating the target direction; or, receiving gesture image information that is input by means of projection by the user by using a projection screen, parsing a target direction indicated by the gesture image information, and generating direction indication information used for indicating the target direction; or, receiving a control instruction that is input by the user by using an instruction input terminal apparatus corresponding to the selected control mode and that is used for indicating a target direction, where the control instruction used for indicating the target direction includes direction indication information used for indicating the target direction; or, receiving scrolling information that is input by the user by using a keyboard scroll wheel corresponding to the selected control mode, where the scrolling information includes direction indication information used for indicating a target direction.

With reference to the sixth possible implementation manner of the first aspect, in a seventh possible implementation manner of the first aspect, if the manner indication information input manner corresponding to the control mode selected by the user is a touch input manner, the receiving track information that is input by means of sliding by the user on a touch screen in a touch input manner includes: receiving information about one track that is input by means of sliding by the user on the touch screen; and correspondingly, the parsing a target direction indicated by the track information, and generating direction indication information used for indicating the target direction includes: determining, according to start point position information and end point position information, which are included in the information about the one track, of the sliding input on the touch screen, a target direction indicated by the sliding input, and generating direction indication information used for indicating the target direction; or, the receiving track information that is input by means of sliding by the user on a touch screen in a touch input manner includes: receiving information about two tracks that are input by means of sliding by the user on the touch screen; and correspondingly, the parsing a target direction indicated by the track information, and generating direction indication information used for indicating the target direction includes: separately determining, according to start point position information and end point position information, which are included in the information about the two tracks, of the sliding input on the touch screen, extension directions of the two tracks; and determining, according to an angle range limited by the extension directions of the two tracks, a target direction indicated by the sliding input, and generating direction indication information used for indicating the target direction.

With reference to the seventh possible implementation manner of the first aspect, in an eighth possible implementation manner of the first aspect, the determining, according to an angle range limited by the extension directions of the two tracks, a target direction indicated by the sliding input includes: determining, according to the extension directions of the two tracks, an extension direction of an angle bisector of an included angle formed by the two tracks; and determining, according to the extension direction of the angle bisector, that the target direction indicated by the sliding input is within a first angle range, where the first angle range uses the extension direction of the angle bisector as a center, and uses a half of a degree of the included angle formed by the two tracks as a main lobe width.

With reference to the first aspect or one of the first eight possible implementation manners of the first aspect, in a ninth possible implementation manner of the first aspect, before the receiving direction indication information input by a user and used for indicating a target direction, the method further includes: sensing that an orientation of the sound signal processing array changes, and determining an orientation variation; determining, according to the orientation variation and a target direction that is before the orientation of the sound signal processing array changes, a target direction that is after the orientation of the sound signal processing array changes; and prompting the user to input the direction indication information used for indicating the target direction that is after the orientation changes.

With reference to the fifth possible implementation manner of the first aspect, in a tenth possible implementation manner of the first aspect, the control mode selected by the user is a scan mode, where the scan mode is a mode in which the user is prompted by means of scanning to input the direction indication information; and before the receiving the direction indication information that is input by the user in a direction indication information input manner corresponding to the selected control mode, the method further includes: collecting by means of scanning sound signals in at least two directions; analyzing energy of the sound signals, and determining a sound source direction of a sound signal with maximum energy; and prompting the user to input, according to the sound source direction, the direction indication information.

With reference to a second aspect, another sound signal processing method provided by an embodiment of the present invention includes:

determining a receiving direction of a sound signal processing array according to a main sound source direction, and determining a target direction of the processing array according to the receiving direction and a beam direction of the sound signal processing array, where the target direction refers to an orientation of the processing array when the receiving direction of the processing array is consistent with the main sound source direction; determining an included angle between the orientation of the sound signal processing array and the target direction; and prompting a user to adjust, according to the included angle, the orientation of the sound signal processing array, so as to enable the receiving direction of the sound signal processing array to be consistent with the main sound source direction.

With reference to a third aspect, a sound signal processing device provided by an embodiment of the present invention includes:

a receiving module, configured to receive direction indication information input by a user and used for indicating a target direction; and an adjustment module, configured to adjust, according to the direction indication information, a beam direction of a sound signal processing array to a state corresponding to the target direction.

In a first possible implementation manner of the third aspect, the adjustment module is specifically configured to determine, according to the direction indication information, a signal delay corresponding to each sound signal processing unit in the sound signal processing array; and perform, according to each signal delay, delayed processing on a sound signal that needs to be processed by the sound signal processing unit corresponding to the signal delay, to acquire the sound signal on which the delayed processing has been performed, and transmit the sound signal on which the delayed processing has been performed to a beamformer, so as to adjust the beam direction of the sound signal processing array to the state corresponding to the target direction. With reference to the first possible implementation manner of the third aspect, in a second possible implementation manner of the third aspect, the adjustment module is specifically configured to: acquire, according to the direction indication information by using the following formula, a signal delay $\tau_n(\beta)$ corresponding to each sound processing unit n in the sound signal processing array:

$$\tau_n(\beta) = \frac{d_n \cos\beta}{c} \times f_s$$

where $d_n$ denotes a distance between one sound signal processing unit n in sound signal processing units that are linearly arranged and included in the sound signal processing array and the center of the sound signal processing array, $\beta$ denotes an approximate included angle between the target direction, to which the center of the sound signal processing array points, indicated by the direction indication information and a reference coordinate, c denotes a speed of sound, and $f_s$ denotes a sound signal sampling frequency of the sound signal processing array; and

perform, according to the signal delay $\tau_n(\beta)$ corresponding to the sound signal processing unit n, delayed processing on a sound signal collected by the sound signal processing unit n, where the sound signal on which the delayed processing has been performed may be expressed as:

$$Y_n(\omega,\beta) = \overline{Y}_n(\omega,\beta) * e^{-j\omega\tau_n(\beta)}$$

where $\overline{Y}_n(\omega,\beta)$ is a frequency domain signal obtained after time-frequency conversion is performed on the sound signal collected by the sound signal processing unit n, and $\omega$ denotes a frequency index.

With reference to the first possible implementation manner of the third aspect, in a third possible implementation manner of the third aspect, the adjustment module is specifically configured to: acquire, according to the direction indication information by using the following formula, a set T or $\psi$ of the signal delays corresponding to the sound processing units in the sound signal processing array:

$$T = [T_1, T_2 \ldots, T_M] = \left[ \frac{r_1 - r_a}{c} f_a, \frac{r_2 - r_a}{c} f_a \ldots, \frac{r_M - r_a}{c} f_a \right],$$

or

$$\psi = [\psi_1, \psi_2 \ldots, \psi_M] = \left[ e^{-j\frac{2\pi f_a(r_1 - r_a)}{c}}, e^{-j\frac{2\pi f_a(r_2 - r_a)}{c}} \ldots, e^{-j\frac{2\pi f_a(r_M - r_a)}{c}} \right]$$

where $T_M$ denotes a signal delay corresponding to the $M^{th}$ sound processing unit in the sound processing array, $r_m$ denotes a distance from a target A in the target direction indicated by the direction indication information to the $m^{th}$ sound processing unit, $f_a$ denotes a sound signal sampling frequency of the sound processing array, and c denotes a speed of sound;

$r_m$ is acquired by using the following formula:

$$r_m = \sqrt{r_a^2 + b^2 - 2br_a \sin\theta \cos a_m}, m = 1, 2\ldots, \ M$$

where $r_a$ denotes a distance between the target A in the target direction indicated by the direction indication information and an origin of a reference coordinate, the origin of the reference coordinate is a circle center of the sound processing array that is annularly arranged, b denotes a radius of the sound processing array that is annularly and uniformly arranged, and $a_m$ denotes an included angle between a connection line between a projection A' of the target A on a plane on which the sound processing array is located and the origin and a connection line between the $m^{th}$ sound processing unit and the origin; and

$a_m$ is acquired by using the following formula:

$$\mathrm{a}_{\mathrm{m}} = \mathrm{a}_{1} + \frac{2\pi(\mathrm{m}\text{-}1)}{\mathrm{M}}, \mathrm{m} = 1,2\ldots,\mathrm{M}$$

where $a_1$ denotes an included angle between the connection line between the projection A' of the target A on the plane on which the sound processing array is located and the origin and a connection line between the first sound processing unit and the origin; and

perform, according to a signal delay $T_M$ or $\psi_M$ in the set T or $\psi$ of the signal delays, delayed processing on a corresponding sound signal collected by the sound signal processing unit M, where the sound signal on which the delayed processing has been performed may be expressed as:

$$Y_{M}\left(\omega, \beta\right) = \overline{Y}_{M}\left(\omega, \beta\right) * e^{-j\omega T_M},$$

or

$$Y_{M}\left(\omega, \beta\right) = \overline{Y}_{M}\left(\omega, \beta\right) * e^{-j\omega\psi_M}$$

where $\overline{Y}_n(\omega,\beta)$ is a frequency domain signal obtained after time-frequency conversion is performed on a sound signal collected by a sound signal processing unit n, and $\omega$ denotes a frequency index.

With reference to one of the first to the third possible implementation manners of the third aspect, in a fourth possible implementation manner of the third aspect, the sound signal processing array includes a sound signal collection array, where the sound signal collection array includes multiple sound signal collection units; and correspondingly, the adjustment module is specifically configured to determine, according to the direction indication information, a signal delay corresponding to each sound signal collection unit in the sound signal collection array; and perform, according to each signal delay, delayed processing on a sound signal collected by the sound signal collection unit corresponding to the signal delay; or, the sound signal processing array includes a sound signal sending array, where the sound signal sending array includes multiple sound signal sending units; and correspondingly, the adjustment module is specifically configured to determine, according to the direction indication information, a signal delay corresponding to each sound signal sending unit in the sound signal sending array; and perform, according to each signal delay, delayed processing on a sound signal sent by the sound signal sending unit corresponding to the signal delay.

With reference to the third aspect or the first to the third possible implementation manners of the third aspect, in a fifth possible implementation manner of the third aspect, the receiving module is further configured to receive a control mode display instruction input by the user; the device further includes: a display module, configured to acquire multiple available control modes and display the multiple available control modes to the user according to the control mode display instruction, where each control mode in the multiple control modes corresponds to at least one direction indication information input manner; and the receiving module is further configured to receive a control mode selection instruction for the multiple control modes that is sent by the user, and enable a control mode selected by the user; and receive the direction indication information that is input by the user in a direction indication information input manner corresponding to the selected control mode and that is used for indicating the target direction.

With reference to the fifth possible implementation manner of the third aspect, in a sixth possible implementation manner of the third aspect, the multiple control modes include a user autonomous control mode, where the user autonomous control mode is a mode in which the user is allowed to autonomously input the direction indication information; and if the control mode selected by the user is the user autonomous control mode, the receiving module is specifically configured to receive a voice signal that is input by the user in a voice input manner, and parse the voice signal to acquire direction indication information included in the voice signal; or, the receiving module is specifically configured to receive track information that is input by means of sliding by the user on a touch screen in a touch input manner, parse a target direction indicated by the track information, and generate direction indication information used for indicating the target direction; or, the receiving module is specifically configured to receive gesture image information that is input by means of projection by the user by using a projection screen, parse a target direction indicated by the gesture image information, and generate direction indication information used for indicating the target direction; or, the receiving module is specifically configured to receive a control instruction that is input by the user by using an instruction input terminal apparatus corresponding to the selected control mode and that is used for indicating a target direction, where the control instruction used for indicating the target direction includes direction indication information used for indicating the target direction; or, the receiving module is specifically configured to receive scrolling information that is input by the user by using a keyboard scroll wheel corresponding to the selected control mode, where the scrolling information includes direction indication information used for indicating a target direction.

With reference to the sixth possible implementation manner of the third aspect, in a seventh possible implementation manner of the third aspect, if the manner indication information input manner corresponding to the control mode selected by the user is a touch input manner, the receiving module is specifically configured to receive information about one track that is input by means of sliding by the user on the touch screen; and determine, according to start point position information and end point position information, which are included in the information about the one track, of the sliding input on the touch screen, a target direction indicated by the sliding input, and generate direction indication information used for indicating the target direction; or, the receiving module is specifically configured to receive information about two tracks that are input by means of sliding by the user on the touch screen; and separately determine, according to start point position information and end point position information, which are included in the information about the two tracks, of the sliding input on the touch screen, extension directions of the two tracks; and determine, according to an angle range limited by the extension directions of the two tracks, a target direction indicated by the sliding input, and generate direction indication information used for indicating the target direction.

With reference to the seventh possible implementation manner of the third aspect, in an eighth possible implementation manner of the third aspect, the receiving module is specifically configured to determine, according to the extension directions of the two tracks, an extension direction of an angle bisector of an included angle formed by the two tracks; and determine, according to the extension direction of the angle bisector, that the target direction indicated by the sliding input is within a first angle range, where the first angle range uses the extension direction of the angle bisector as a center, and uses a half of a degree of the included angle formed by the two tracks as a main lobe width.

With reference to the third aspect or one of the first eight possible implementation manners of the first aspect, in a ninth possible implementation manner of the third aspect, the device further includes: a sensing module, configured to sense that an orientation of the sound signal processing array changes, and determine an orientation variation; a determining module, configured to determine, according to the orientation variation and a target direction that is before the orientation of the sound signal processing array changes, a target direction that is after the orientation of the sound signal processing array changes; and a prompting module, configured to prompt the user to input the direction indication information used for indicating the target direction that is after the orientation changes.

With reference to the fifth possible implementation manners of the third aspect, in a tenth possible implementation manner of the third aspect, the control mode selected by the user is a scan mode, where the scan mode is a mode in which the user is prompted by means of scanning to input the direction indication information; and correspondingly, the device further includes: a scanning module, configured to collect by means of scanning sound signals in at least two directions; and an analyzing module, configured to analyze energy of the sound signals, and determine a sound source direction of a sound signal with maximum energy, where the prompting module is further configured to prompt the user to input, according to the sound source direction, the direction indication information.

With reference to a fourth aspect, another sound signal processing device provided by an embodiment of the present invention includes:

a determining module, configured to determine a receiving direction of a sound signal processing array according to a main sound source direction, and determine a target direction of the processing array according to the receiving direction and a beam direction of the sound signal processing array, where the target direction refers to an orientation of the processing array when the receiving direction of the processing array is consistent with the main sound source direction; and determine an included angle between the orientation of the sound signal processing array and the target direction, where the beam direction of the sound signal processing array is fixed; and a prompting module, configured to prompt a user to adjust, according to the included angle, the orientation of the sound signal processing array, so as to enable the receiving direction of the sound signal processing array to be consistent with the main sound source direction.

With reference to the sound signal processing method and device provided by the embodiments of the present invention, a beam direction of a sound signal processing array is adjusted according to a direction indication provided by a user and used for indicating a target direction, so that a sound signal can still be accurately processed in a noisy environment, thereby achieving an enhancement effect for the processed sound signal. According to the sound signal processing method and device provided by another embodiment of the present invention, a receiving direction of a signal processing array can be determined according to a main sound source direction, and a target direction of the processing array is determined according to the receiving direction and a beam direction of the sound signal processing array, and an included angle between an orientation of the processing array and the target direction is used to prompt a user to adjust the orientation of the sound signal processing array, so as to enable the receiving direction of the sound signal processing array to be consistent with the main sound source direction, thereby improving estimation accuracy of the signal processing array for a main sound source.

**BRIEF DESCRIPTION OF DRAWINGS**

To describe the technical solutions in the embodiments of the present invention or in the prior art more clearly, the following briefly introduces the accompanying drawings required for describing the embodiments or the prior art. Apparently, the accompanying drawings in the following description show some embodiments of the present invention, and persons of ordinary skill in the art may still derive other drawings from these accompanying drawings without creative efforts.

FIG. 1 is a flowchart of Embodiment 1 of a sound signal processing method according to the present invention;

FIG. 2 is a schematic diagram of Embodiment 2 of a sound signal processing method according to the present invention;

FIG. 3 is a schematic diagram of Embodiment 3 of a sound signal processing method according to the present invention;

FIG. 4 is a schematic diagram of Embodiment 4 of a sound signal processing method according to the present invention;

FIG. 5 is a schematic diagram of Embodiment 5 of a sound signal processing method according to the present invention;

FIG. 6 is a schematic diagram of Embodiment 6 of a sound signal processing method according to the present invention;

FIG. 7 is a flowchart of Embodiment 7 of a sound signal processing method according to the present invention;

FIG. 8 is a schematic structural diagram of Embodiment 1 of a sound signal processing device according to the present invention;

FIG. 9 is a schematic structural diagram of Embodiment 2 of a sound signal processing device according to the present invention;

FIG. 10 is a schematic structural diagram of Embodiment 3 of a sound signal processing device according to the present invention; and

FIG. 11 is a schematic structural diagram of Embodiment 4 of a sound signal processing device according to the present invention.

**DESCRIPTION OF EMBODIMENTS**

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by persons of ordinary skill in the art based on the embodiments of the present invention without creative efforts shall fall within the protection scope of the present invention.

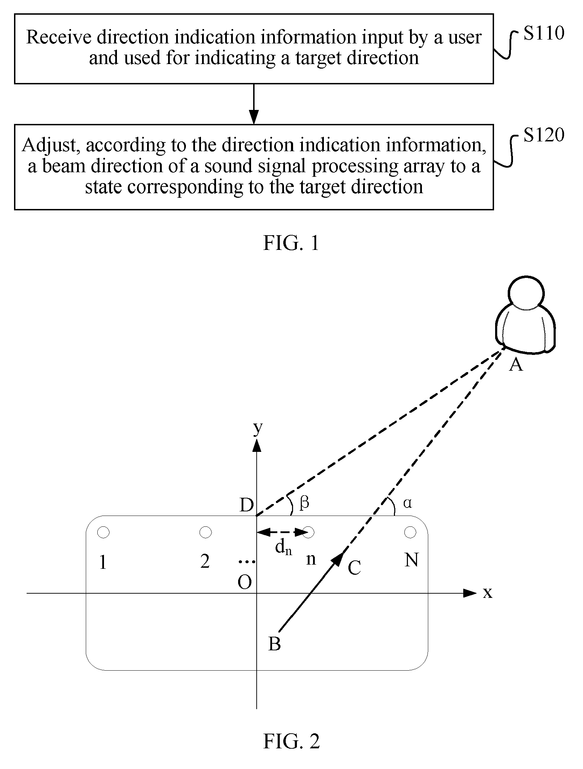

FIG. 1 is a flowchart of Embodiment 1 of a sound signal processing method according to the present invention. As shown in FIG. 1, the sound signal processing method provided by this embodiment may include:

S110: Receive direction indication information input by a user and used for indicating a target direction.

Specifically, when this embodiment of the present invention is applied to a case in which a sound signal collection array collects a sound signal, for example, a case in which a microphone array collects a sound signal, a target direction may be a direction of a main sound source or another direction in which a sound signal that needs to be emphatically collected by the microphone array is located; however, when this embodiment of the present invention is applied to a case in which a sound signal sending array sends a sound signal, for example, a case in which a loudspeaker array sends a sound signal, a target direction may be a direction in which the sound signal is sent to a destination. In this embodiment of the present invention, a sound signal collection array, a sound signal sending array, and the like are collectively referred to as a sound signal processing array. In subsequent embodiments, an example in which the present invention is applied to a case in which a sound signal collection array collects a sound signal is mainly used to describe implementation manners of the present invention, and persons skilled in the art may derive, on this basis without creative efforts, an implementation manner when the embodiments of the present invention are applied to a case in which a sound signal sending array sends a sound signal.

An apparatus configured to perform the sound signal processing method may receive the direction indication information input by the user and used for indicating the target direction, where the direction indication information may be information that is input by the user by using voice, by using a gesture, or by rotating a knob, or in another manner and that can indicate the target direction.

S120: Adjust, according to the direction indication information, a beam direction of a sound signal processing array to a state corresponding to the target direction.

The beam direction of the sound signal processing array may be understood as a source or a transmission direction corresponding to a sound signal enhanced after processing by the sound signal processing array. For example, a beam direction of a microphone array may be understood as a source direction of a sound signal mainly collected after enhancement processing by the microphone array; a beam direction of a loudspeaker array may be understood as a main direction in which a sound signal is broadcast after enhancement processing by the loudspeaker array. A sound signal processing apparatus may adjust, according to the direction indication information used for indicating the target direction, the beam direction of the sound signal processing array to the state corresponding to the target direction, for example, adjust the beam direction of the microphone array to a direction in which a sound source that needs to be collected is located, so as to perform accurate processing on a collected sound signal; or the sound signal processing apparatus may adjust the beam direction of the microphone array to a state corresponding to a direction in which a collected sound source is located, that is, the beam direction is same as the direction in which the collected sound source is located, or a deviation between the beam direction and the direction in which the collected sound source is located is within a preset or proper range.

According to the sound signal processing method provided by this embodiment, a beam direction of a sound signal processing array is adjusted according to direction indication information provided by a user and used for indicating a target direction, so that a sound signal can still be accurately processed in a noisy environment, thereby achieving an enhancement effect for the processed sound signal.

In the embodiment in FIG. 1, the adjusting, according to the direction indication information, a beam direction of a sound signal processing array to a state corresponding to the target direction includes: determining, according to the direction indication information, a signal delay corresponding to each sound signal processing unit in the sound signal processing array; and performing, according to each signal delay, delayed processing on a sound signal that needs to be processed by the sound signal processing unit corresponding to the signal delay, to acquire the sound signal on which the delayed processing has been performed, and transmitting the sound signal on which the delayed processing has been performed to a beamformer, so as to adjust the beam direction of the sound signal processing array to the state corresponding to the target direction.

The sound signal processing array includes a sound signal collection array, where the sound signal collection array includes multiple sound signal collection units; correspondingly, the determining, according to the direction indication information, a signal delay corresponding to each sound signal processing unit in the sound signal processing array includes: determining, according to the direction indication information, a signal delay corresponding to each sound signal collection unit in the sound signal collection array; and correspondingly, the performing, according to each signal delay, delayed processing on a sound signal that needs to be processed by the sound signal processing unit corresponding to the signal delay includes: performing, according to each signal delay, delayed processing on a sound signal collected by the sound signal collection unit corresponding to the signal delay. Alternatively, the sound signal processing array includes a sound signal sending array, where the sound signal sending array includes multiple sound signal sending units; correspondingly, the determining, according to the direction indication information, a signal delay corresponding to each sound signal processing unit in the sound signal processing array includes: determining, according to the direction indication information, a signal delay corresponding to each sound signal sending unit in the sound signal sending array; and correspondingly, the performing, according to each signal delay, delayed processing on a sound signal that needs to be processed by the sound signal processing unit corresponding to the signal delay includes: performing, according to each signal delay, delayed processing on a sound signal sent by the sound signal sending unit corresponding to the signal delay.

In other words, the signal delay corresponding to each sound signal processing unit in the sound signal processing array is determined according to the direction indication information, for example, a signal delay corresponding to each microphone unit may be acquired according to the direction indication information used for indicating the target direction and information such as an arranged position of a sound signal processing unit included in a microphone array, that is, a microphone unit; the delayed processing is performed, according to each signal delay, on the sound signal that needs to be processed by the sound signal processing unit corresponding to the signal delay, for example, after the signal delay corresponding to each microphone unit included in the microphone array is acquired, delayed processing may be performed, according to each signal delay, on a sound signal collected by the microphone unit corresponding to each signal delay, so as to achieve an objective of reserving or enhancing, by the microphone unit, only collected sound in the target direction.

The signal delay corresponding to each sound signal processing unit in the sound signal processing array is determined according to the direction indication information, for example, a signal delay corresponding to each loudspeaker unit may be acquired according to the direction indication information used for indicating the target direction and information such as an arranged position of a sound signal processing unit included in a loudspeaker array, that is, a loudspeaker unit; the delayed processing is performed, according to each signal delay, on the sound signal that needs to be processed by the sound signal processing unit corresponding to the signal delay, for example, after the signal delay corresponding to each loudspeaker unit included in the loudspeaker array is acquired, delayed processing may be performed, according to each signal delay, on a sound signal to be sent by the loudspeaker unit corresponding to each signal delay, so as to achieve an objective of reserving or enhancing, by the loudspeaker unit, only sound sent to the target direction. According to the sound signal processing method provided by this embodiment, a sound signal delay is first determined according to direction indication information provided by a user and used for indicating a target direction, and then delayed processing is performed on a sound signal according to the sound signal delay, so as to adjust a beam direction of a sound signal processing array, so that a sound signal can still be accurately processed in a noisy environment, thereby achieving an enhancement effect for the processed sound signal.

In the sound signal processing method provided by this embodiment of the present invention, the determining, according to the direction indication information, a signal delay corresponding to each sound signal processing unit in the sound signal processing array may include: determining, according to the direction indication information, a signal delay of each sound signal processing unit that is linearly arranged or annularly arranged and included in the sound signal processing array.

An example in which the sound signal processing array is the microphone array is used, and the acquiring, according to the direction indication information, a signal delay corresponding to a microphone unit included in the microphone array may include: acquiring, according to the direction indication information, signal delays corresponding to more than one microphone unit included in the microphone array, where the microphone units may be arranged in multiple forms, for example, linearly arranged, annularly arranged, or arranged in another irregular shape. Specifically, FIG. 2 is a schematic diagram of Embodiment 2 of a sound signal processing method according to the present invention. As shown in FIG. 2, if a mobile phone is used as a sound signal collection device, an example in which microphone units 1 to N included in a microphone array in the mobile phone are linearly arranged is used, where a central point of the mobile phone is an origin O, and a target is A.

First, the mobile phone receives direction indication information BC that is input by means of sliding by a user on a touch screen, where the direction indication information BC is used for indicating a direction of the target A, an included angle between the direction indication information BC and a direction of a horizontal coordinate axis x is $\alpha$, an included angle between a direction in which the center D of the microphone array points to the target A and the direction of the horizontal coordinate x is $\beta$, and because a distance between the target A and the mobile phone is much greater than a size of the microphone array itself, it may be approximately considered that $\alpha=\beta$. A distance between one microphone unit n in microphone units that are linearly arranged and included in the microphone array and the center D of the microphone array is $d_n$. Therefore, a signal delay $\tau_n(\beta)$ corresponding to the microphone unit n may be expressed as:

$$\tau_n(\beta) = \frac{d_n\cos\beta}{c} \times f_s \qquad \text{formula (1)}$$

where in the formula (1), c denotes a speed of sound, and $f_s$ denotes a sound signal sampling frequency of the microphone array.

After the signal delay $\tau_n(\beta)$ corresponding to the microphone unit n is obtained, delayed processing is performed, according to the signal delay, on a sound signal collected by the microphone unit n corresponding to the signal delay, and the sound signal on which the delayed processing has been performed may be expressed as:

$$Y_n(\omega,\beta) = \overline{Y}_n(\omega,\beta) * e^{-j\omega\tau_n(\beta)} \qquad \text{formula (2)}$$

where in the formula (2), $\overline{Y}_n(\omega,\beta)$ is a frequency domain signal obtained after time-frequency conversion is performed on the collected sound signal, and $\omega$ denotes a frequency index.

The sound signal on which the delayed processing has been performed is sent to a beamformer, so that an objective of adjusting a beam direction of the microphone array according to the direction indication information BC, so as to reserve or enhance a sound signal from the target A can be achieved.

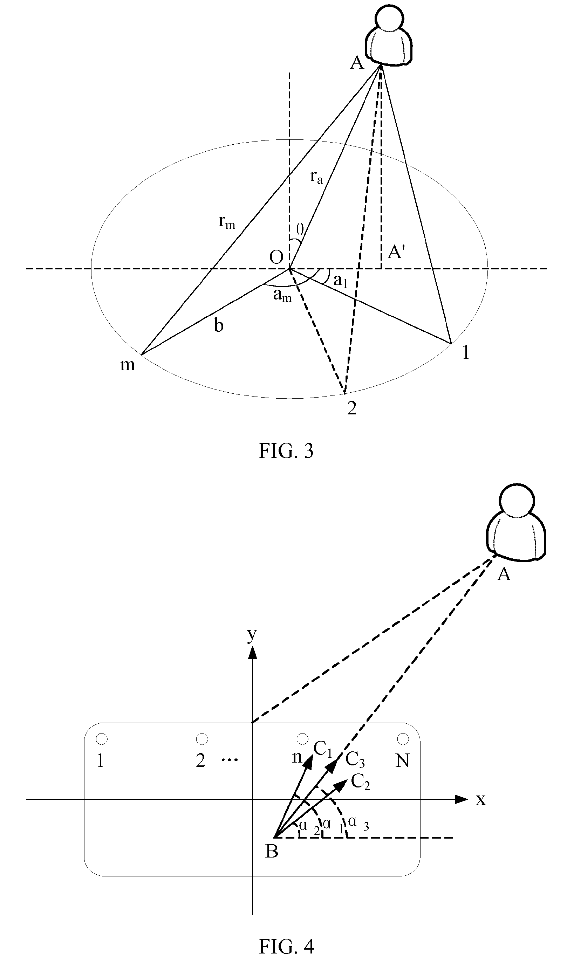

FIG. 3 is a schematic diagram of Embodiment 3 of a sound signal processing method according to the present invention. As shown in FIG. 3, a mobile phone is still used as a sound signal collection device, but an example in which M microphone units included in a microphone array in the mobile phone are annularly and uniformly arranged is used, where a central point of the mobile phone is an origin O, a target is A, a radius of the annular array formed by the M microphone units is b, an included angle between a connection line between the target A and the origin O and a straight line perpendicular to a plane on which the microphone array is located is $\theta$, a distance from the target A to the origin O is $r_a$, a sound signal sampling frequency of the microphone array is $f_a$, a speed of sound is c, and a projection of the target A on the plane on which microphone array is located is A', so that an included angle between OA' and a connection line from a microphone unit 1 to the origin O is defined as $a_1$, and then an included angle $a_m$ between OA' and a connection line from a microphone unit m to the origin O may be expressed as:

$$a_m = a_1 + \frac{2\pi(m-1)}{M}, m = 1,2\ldots,M \quad \text{formula (3)};$$

a distance $r_m$ from the target A to the microphone unit m may be expressed as:

$$r_m = \sqrt{\left|AA'\right|^2 + \left|mA'\right|^2} = \sqrt{r_a^2 + b^2 - 2br_a \sin\theta\cos a_m}, m = 1,2\ldots,M \quad \text{formula (4)};$$

and

a set of signal delays corresponding to the M microphone units may be expressed as:

$$T = [T_1, T_2 \ldots, T_M] = \left[\frac{r_1 - r_a}{c}f_a, \frac{r_2 - r_a}{c}f_a \ldots, \frac{r_M - r_a}{c}f_a\right] \quad \text{formula (5)};$$

and

delayed processing is performed, according to a signal delay $T_M$ or $\psi_M$ in the set T or $\psi$ of the signal delays, on a corresponding sound signal collected by the sound signal processing unit M, where the sound signal on which the delayed processing has been performed may be expressed as:

$$Y_M(\omega, \beta) = \overline{Y}_M(\omega, \beta) * e^{-j\omega T_M},$$

or

$$Y_M(\omega, \beta) = \overline{Y}_M(\omega, \beta) * e^{-j\omega\psi_M}$$

where $\overline{Y}_n(\omega,\beta)$ is a frequency domain signal obtained after time-frequency conversion is performed on a sound signal collected by a sound signal processing unit n, and $\omega$ denotes a frequency index. The sound signal on which the delayed processing has been performed is sent to a beamformer, so that an objective of adjusting a beam direction of the microphone array, so as to reserve or enhance a sound signal from the target A can be achieved.

In the embodiments of the sound signal processing methods provided by FIG. 2 and FIG. 3, the example in which the microphone units are linearly arranged and the example in which the microphone units are annularly arranged are respectively used to describe the sound signal processing methods provided by the embodiments of the present invention, and it should be clear that, an application scenario of the embodiments of the present invention is not limited thereto, and a calculation manner is not limited thereto either. For example, in the embodiment in FIG. 3, in addition to calculating a signal delay based on a sampling point, the signal delay may be expressed in a form of a phase difference as follows:

$$\psi = [\psi_1, \psi_2 \ldots, \psi_M] = \left[e^{-j\frac{2\pi f_a(r_1 - r_a)}{c}}, e^{-j\frac{2\pi f_a(r_2 - r_a)}{c}} \ldots, e^{-j\frac{2\pi f_a(r_M - r_a)}{c}}\right] \quad \text{formula (6)}.$$

According to the embodiments of the sound signal processing methods provided by FIG. 2 and FIG. 3, signal delays corresponding to multiple microphone units arranged in different forms and included in a microphone array are acquired according to direction indication information autonomously provided by a user, and corresponding delayed processing is performed on sound signals collected by the multiple microphone units arranged in different forms, so as to adjust a beam direction of the microphone array, so that a sound signal can still be accurately processed in a noisy environment, thereby achieving an enhancement effect for the processed sound signal.

Further, before the receiving direction indication information input by a user and used for indicating a target direction, the method further includes: receiving a control mode display instruction input by the user; acquiring multiple available control modes and displaying the multiple available control modes to the user according to the control mode display instruction, where each control mode in the multiple control modes corresponds to at least one direction indication information input manner; receiving a control mode selection instruction sent by the user, and enabling a control mode selected by the user, where the receiving direction indication information input by a user and used for indicating a target direction includes: receiving the direction indication information that is input by the user in a direction indication information input manner corresponding to the selected control mode and that is used for indicating the target direction.

In other words, this embodiment of the present invention can provide, for the user, multiple control modes used for controlling a sound signal processing manner for the user to select. After receiving the control mode display instruction input by the user, the sound signal processing device may acquire multiple control modes that can be provided for the user and display the multiple control modes to the user. The control mode may have one or more direction indication information input manners, that is, the user may input, in the control mode in one or more manners, the direction indication information used for indicating the target direction. After the user selects the control mode, the sound signal processing device enables the control mode selected by the user, and the user inputs the direction indication information in a direction indication information input manner in the selected control mode, so as to control processing on the sound signal. According to this embodiment of the present invention, multiple control modes are provided for the user to control processing on the sound signal, which aims to providing multiple different options for the user, so as to implement multiple manners of processing on the sound signal, and increase use convenience for the user at the same time.

The control mode selected by the user is a user autonomous control mode, where the user autonomous control mode is a mode in which the user is allowed to autonomously input the direction indication information, and then the following several manners may be included to process the sound signal:

Manner 1:

The receiving the direction indication information that is input by the user in a direction indication information input manner corresponding to the selected control mode and that is used for indicating the target direction includes: receiving a voice signal that is input by the user in a voice input manner, and parsing the voice signal to acquire direction indication information included in the voice signal.

In the user autonomous control mode, the user may input, by using voice, a voice signal used for indicating the target direction; the voice signal may be recognized by using a voice recognizer; in a word list design and model training process, the voice recognizer performs strengthening training on a word indicating an orientation or an angle, to ensure that a recognition rate of such a word is above 95%; and by means of related verification, currently, a recognition rate of a key word with a small vocabulary can reach above 95%. For example, an example in which the mobile phone is used as a sound collection device is used; and the user can say an expected target direction of the beam direction of the microphone array in the mobile phone, for example, "35 degrees in right front". After receiving the voice signal, the voice recognizer of the mobile phone acquires by means of parsing, according to a pre-specified rule, orientations separately indicated by "right", "front", and "35 degrees" in the voice signal, so as to accurately determine target direction information included in the voice signal. The beam direction of the sound signal processing array is adjusted to a target direction corresponding to the target direction information.

In this implementation manner of the sound signal processing method of inputting, by means of voice input, a voice signal used for indicating a target direction, a manual input operation of a user does not need to be based on, a signal delay corresponding to each microphone unit included in a microphone array can be acquired according to a voice signal autonomously provided by the user, and corresponding delayed processing is performed on a sound signal collected by a microphone unit, so that the microphone unit reserves or enhances a sound signal in the direction indicated by the voice signal, so that an enhancement effect can still be achieved for the collected sound signal in a noisy environment.

Manner 2:

Track information that is input by means of sliding by the user on a touch screen in a touch input manner is received, a target direction indicated by the track information is parsed, and direction indication information used for indicating the target direction is generated. The receiving track information that is input by means of sliding by the user on a touch screen in a touch input manner includes: receiving information about a track that is input by means of sliding by the user on the touch screen; and correspondingly, the parsing a target direction indicated by the track information, and generating direction indication information used for indicating the target direction includes: determining, according to start point position information and end point position information, which are included in the information about the one track, of the sliding input on the touch screen, a target direction indicated by the sliding input, and generating direction indication information used for indicating the target direction. Alternatively, the receiving track information that is input by means of sliding by the user on a touch screen in a touch input manner includes: receiving information about two tracks that are input by means of sliding by the user on the touch screen; and correspondingly, the parsing a target direction indicated by the track information, and generating direction indication information used for indicating the target direction includes: separately determining, according to start point position information and end point position information, which are included in the information about the two tracks, of the sliding input on the touch screen, extension directions of the two tracks; and determining, according to an angle range limited by the extension directions of the two tracks, a target direction indicated by the sliding input, and generating direction indication information used for indicating the target direction. Specifically: Using FIG. 2 as an example, an example in which the user inputs by means of sliding the direction indication information, that is, one piece of track information BC, on a touch screen of the mobile phone toward the target direction, to control the microphone array to collect a sound signal of the target A is used to describe in detail the sound signal processing method provided by this embodiment.

First step: Receive the one piece of track information BC that is input by means of sliding by the user on the touch screen of the mobile phone toward the target direction.

Second step: Determine a coordinate $(x_b, y_b)$, in a coordinate system of the mobile phone, of a start point B of the track information BC, and a coordinate $(x_c, y_c)$, in the coordinate system of the mobile phone, of an end point C of the track information BC, and acquire an included angle $\alpha$ between the track information BC and the direction of the horizontal coordinate axis x of the coordinate system of the mobile phone:

$$\alpha = \arctan\frac{y_c - y_b}{x_c - x_b} \quad \text{formula (7).}$$

A method for acquiring $\alpha$ is not limited thereto, for example, when the user inputs the track information BC by using a voice signal or by using a knob, the user can acquire $\alpha$ according to a predefined voice indication rule, or directly learn $\alpha$ according to a scale value of the knob.

Third step: Obtain the included angle $\beta$ between the direction in which the center D of the microphone array points to the target A and the direction of the horizontal coordinate axis x, where, because the distance between the target A and the mobile phone is much greater than the size of the microphone array itself, it may be approximately considered that $\beta = \alpha$.

Fourth step: Acquire, according to the included angle $\beta$ between the direction in which the center D of the microphone array points to the target A and the direction of the horizontal coordinate axis x, the signal delay $\tau_n(\beta)$ corresponding to the microphone unit n included in the microphone array:

$$\tau_n(\beta) = \frac{d_n\cos\beta}{c} \times f_s \quad \text{formula (1)}$$

where in the formula (1), the distance between the one microphone unit n in microphone units that are linearly arranged and included in the microphone array and the center D of the microphone array is $d_n$, c denotes the speed of sound, and $f_s$ denotes the sound signal sampling frequency of the microphone array.

Fifth step: Perform preprocessing on the sound signal collected by the microphone array, including noise reduction and echo suppression, then, perform time-frequency conversion on the sound signal to obtain the frequency domain signal $\overline{Y}_n(\omega,\beta)$, where $\omega$ denotes the frequency index, and perform delayed processing on the collected sound signal, where the sound signal on which the delayed processing has been performed is:

$$Y_n(\omega,\beta) = \overline{Y}_n(\omega,\beta) * e^{-j\omega\tau_n(\beta)} \quad \text{formula (2).}$$

Sixth step: Send the sound signal on which the delayed processing has been performed to the beamformer, so that an objective of adjusting the beam direction of the microphone array according to the track information BC, so as to reserve or enhance a sound signal from the target A can be achieved.

Before the forgoing implementation manner is performed, or after the included angle $\beta$ between the direction in which the center D of the microphone array points to the target A and the direction of the horizontal coordinate axis x is obtained, a determining prompt may be provided for the user, to prompt the user to determine whether to change the direction indication information used for indicating the target direction, or prompt the user to determine whether newly input direction indication information is correct and the like, so as to prevent the user from mistakenly staring or mistakenly operating input of the direction indication information.

In this implementation manner of the sound signal processing method of inputting, by using a touch screen, track information used for indicating a target direction, a visual direction indication information input manner is provided for a user; and the user can easily and conveniently provide track information for a mobile phone according to the target direction, so that the mobile phone determines the target direction according to the track information provided by the user, so as to adjust a beam direction of a sound signal processing array, so that a sound source signal can still be accurately processed in a noisy environment, thereby achieving an enhancement effect for the processed sound signal.

FIG. 4 is a schematic diagram of Embodiment 4 of a sound signal processing method according to the present invention. As shown in FIG. 4, a difference between the sound signal processing method provided by this embodiment and the previous embodiment lies in that, in the sound signal processing method provided by this embodiment, the received track information that is input by the user by using the touch screen and that is used for indicating the target direction may include two or more pieces of track information.

Specifically, an example in which the user inputs by means of sliding track information $BC_1$ and track information $BC_2$ on the touch screen of the mobile phone toward the target direction to control the beam direction of the microphone array is used to describe in detail the sound signal processing method provided by this embodiment.

First step: Receive the track information that is input by means of sliding by the user on the touch screen of the mobile phone toward the target direction, where the track information include the track information $BC_1$ and the track information $BC_2$ that have a same start point B, and the track information $BC_1$ and the track information $BC_2$ should be input synchronously, that is, the track information $BC_1$ and the track information $BC_2$ should not be two pieces of track information input successively. The track information $BC_1$ and the track information $BC_2$ are used for indicating a range of a source of a sound signal that needs to be collected, that is, the target A is located in a range of an included angle between the track information $BC_1$ and the track information $BC_2$. Second step: Prompt the user to determine specific track information used for controlling the beam direction of the microphone array, where if the user determines that the specific track information used for controlling the beam direction of the microphone array includes only either of the track information $BC_1$ and the track information $BC_2$, it indicates that synchronous input of the track information $BC_1$ and the track information $BC_2$ by the user is mistaken input, and subsequently, a method for acquiring a signal delay according to the specific track information is similar to that in the embodiment shown in FIG. 2, and details are not provided again; or if the user determines that the specific track information used for controlling the beam direction of the microphone array includes the track information $BC_1$ and the track information $BC_2$, a next step is performed.

Third step: Determine a coordinate $(x_b, y_b)$, in the coordinate system of the mobile phone, of the start point B of the track information $BC_1$ and the track information $BC_2$, a coordinate $(x_{c1}, y_{c1})$, in the coordinate system of the mobile phone, of an end point $C_1$ of the track information $BC_1$ and a coordinate $(x_{c2}, y_{c2})$, in the coordinate system of the mobile phone, of an end point $C_2$ of the track information $BC_2$, and acquire an included angle $\alpha_1$ between the track information $BC_1$ and the direction of the horizontal coordinate axis x of the coordinate system of the mobile phone and an included angle $\alpha_2$ between the track information $BC_2$ and the direction of the horizontal coordinate axis x of the coordinate system of the mobile phone:

$$\alpha_1 = \arctan\frac{y_{c1} - y_b}{x_{c1} - x_b} \quad \text{formula (8);}$$

and

$$\alpha_2 = \arctan\frac{y_{c2} - y_b}{x_{c2} - x_b} \quad \text{formula (9).}$$

A method for acquiring $\alpha_1$ and $\alpha_2$ is not limited thereto.

Fourth step: An included angle $\alpha_3$ between an angle bisector $BC_3$ of the track information $BC_1$ and the track information $BC_2$ and the direction of the horizontal coordinate axis x of the coordinate system:

$$\alpha_3 = \frac{\alpha_1 + \alpha_2}{2} \quad \text{formula (10).}$$

For sound signals collected by the microphone units 1 to N included in the microphone array, the angle bisector $BC_3$ is used as the center, and $\pm \frac{1}{2}\left(\alpha_1 - \alpha_2\right)$ is used as a main lobe width, that is, a sound signal within a range of the included angle between the track information $BC_1$ and the track information $BC_2$ is reserved or enhanced, and a sound signal in another orientation is suppressed.

In this implementation manner of the sound signal processing method of inputting, by using a touch screen, multiple pieces of track information used for indicating a target direction, a visual direction indication information input manner is provided for a user; and the user can easily and conveniently provide track information for a mobile phone according to an approximate orientation of a target, so that the mobile phone determines the target direction according to an extension direction of the track information provided by the user, so as to adjust a beam direction of a sound signal processing array, so that a sound signal can still be accurately processed in a noisy environment, thereby achieving an enhancement effect for the processed sound signal.

Manner 3:

The receiving the direction indication information that is input by the user in a direction indication information input manner corresponding to the selected control mode and that is used for indicating the target direction includes: receiving gesture image information that is input by means of projection by the user by using a projection screen, parsing a target direction indicated by the gesture image information, and generating direction indication information used for indicating the target direction; and receiving a control instruction that is input by the user by using an instruction input terminal apparatus corresponding to the selected control mode and that is used for indicating a target direction, where the control instruction used for indicating the target direction includes direction indication information used for indicating the target direction.

The user may first slide on the projection screen by using a finger or another indication tool, to form gesture image information used for indicating an orientation of a spokesman or another sound source that needs to be collected or indicating an orientation of a destination to which sound is sent; a camera equipped on a projection device may continuously shoot the gesture image information obtained by means of sliding by the user on the projection screen, to collect feature information including position information, grayscale information, change information, and the like, and extract these pieces of feature information; matching is performed between the extracted feature information and a gesture information library built in advance, to search for a gesture closest to the feature information and image information corresponding to the gesture; a signal delay corresponding to a sound processing unit included in the sound processing array is acquired according to the image information; and then delayed processing is performed on a sound signal according to the signal delay.

Manner 4:

The receiving the direction indication information that is input by the user in a direction indication information input manner corresponding to the selected control mode and that is used for indicating the target direction includes: receiving a control instruction that is input by the user by using an instruction input terminal apparatus corresponding to the selected control mode and that is used for indicating a target direction, where the control instruction used for indicating the target direction includes direction indication information used for indicating the target direction.

The instruction input terminal apparatus may be a wireless control apparatus or a remote control apparatus.

The user may input, by using a terminal device separately disposed with the sound signal processing array or a wireless control apparatus of another type that can control the sound signal processing array, in a short distance remote control or remote control manner, the control instruction used for indicating the target direction, so as to control collection or sending of a sound signal by the sound signal processing array, for example, control collection of a sound signal by the microphone array.

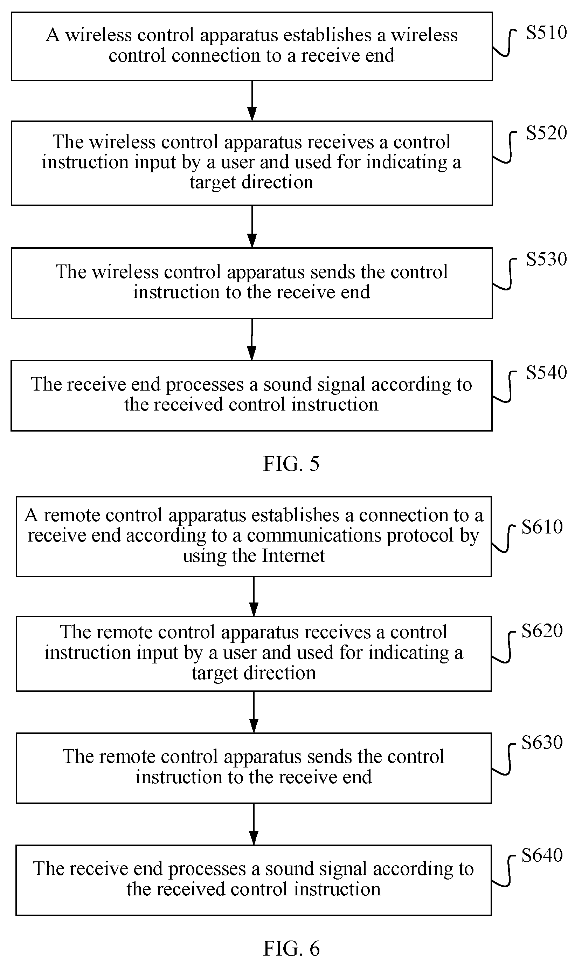

FIG. 5 is a schematic diagram of Embodiment 5 of a sound signal processing method according to the present invention. As shown in FIG. 5, this embodiment shows a specific method for inputting a control instruction in a short distance remote control manner, which may include:

S510: A wireless control apparatus establishes a wireless control connection to a receive end. The wireless control apparatus establishes the wireless control connection to the receive end according to a basic principle of a wireless remote control system, the wireless control apparatus may be a mobile phone or another terminal device with a wireless signal transmitting function, and the receive end includes a sound signal processing array in a form of a microphone array or a loudspeaker array.

S520: The wireless control apparatus receives a control instruction input by a user and used for indicating a target direction. The user may input the control instruction in multiple manners, for example, input by using a voice indication, or input by using a touch screen disposed on the wireless control apparatus.

S530: The wireless control apparatus sends the control instruction to the receive end. The wireless control apparatus may encode, modulate, and amplify the control instruction according to the basic principle of the wireless remote control system, and then send the control instruction to the receive end.

S540: The receive end processes a sound signal according to the received control instruction. An example in which the receive end is a microphone array is used. After receiving, by means of an antenna, processed information sent by the wireless control apparatus and including the control instruction, the microphone array amplifies, demodulates, and decodes the information, acquires, according to the control instruction obtained after decoding, a signal delay corresponding to each microphone unit included in the microphone array, and performs corresponding delayed processing on a collected sound signal, so as to achieve an objective of adjusting an angle of a collection direction. A wireless transmission manner between the wireless control apparatus and the receive end may use an infrared ray or Bluetooth, which is not limited in the present invention.

The user may input, by using a terminal device separately disposed with the sound signal processing array or a remote control apparatus of another type that can control the sound signal processing array, in a remote control manner, the control instruction used for indicating the target direction, so as to control collection or sending of a sound signal by the sound signal processing array, for example, control collection of a sound signal by the microphone array. Control by using the Internet is used as an example:

FIG. 6 is a schematic diagram of Embodiment 6 of a sound signal processing method according to the present invention. As shown in FIG. 6, this embodiment shows a specific method for inputting a control instruction in a remote control manner, which may include:

S610: A remote control apparatus establishes a connection to a receive end according to a communications protocol by using the Internet. The remote control apparatus may be a terminal device that has a wireless communications function and can access the Internet such as a computer or a mobile phone, and the receive end includes a sound signal processing array in a form of a microphone array or a loudspeaker array.

S620: The remote control apparatus receives a control instruction input by a user and used for indicating a target direction. The user may input the control instruction in multiple manners, for example, input by using a voice indication, or input by using a touch screen disposed on the remote control apparatus, or input by using a scroll wheel disposed on the remote control apparatus.

S630: The remote control apparatus sends the control instruction to the receive end. The remote control apparatus may pack, according to a protocol, data including the control instruction used for indicating the target direction, and send the data to the receive end.

S640: The receive end processes a sound signal according to the received control instruction. An example in which the receive end is a microphone array is used. After receiving, by using an antenna, processed information sent by the remote control apparatus and including the control instruction, the microphone array unpacks the data according to a protocol to acquire the control instruction; and the receive end acquires, according to the control instruction, a signal delay corresponding to a processing unit included in the sound signal processing array, and performs corresponding delayed processing on the a sound signal, so as to achieve an objective of adjusting an angle of a collection or sending direction.

Manner 5: The receiving the direction indication information that is input by the user in a direction indication information input manner corresponding to the selected control mode includes: receiving scrolling information that is input by the user by using a keyboard scroll wheel corresponding to the selected control mode, where the scrolling information includes direction indication information used for indicating a target direction.

In the sound signal processing method provided by the foregoing embodiment, the user may input the direction indication information in multiple manners, which aims to providing different options for the user to input the direction indication information, so as to increase use convenience for the user.

Further, before the receiving direction indication information input by a user and used for indicating a target direction, the method further includes: sensing that an orientation of the sound signal processing array changes, and determining an orientation variation; determining, according to the orientation variation and a target direction that is before the orientation of the sound signal processing array changes, a target direction that is after the orientation of the sound signal processing array changes; and prompting the user to input the direction indication information used for indicating the target direction that is after the orientation changes.

Specifically, this implementation manner may be applied to a scenario in which the sound signal processing array or a sound signal processing device in which the sound signal processing array is located is equipped with a sensor such as a motion sensor, a position sensor, or an angle sensor, and has a function of sensing the change of the orientation of the sound signal processing array.

An example in which the sound signal processing device is a mobile phone equipped with a three-axis gyroscope is used, and a specific implementation manner may include:

First step: The user rotates the mobile phone by a certain angle.

Second step: The three-axis gyroscope of the mobile phone senses a change of a position of the mobile phone, that is, a change of an orientation of a microphone array in the mobile phone, and it is assumed that the orientation of the microphone array changes by an angle φ after the rotation, that is, an orientation variation of the microphone array is φ.

Third step: Determine, according to the orientation variation φ and the target direction that is before the orientation of the sound signal processing array changes, a direction of a target relative to the microphone array after the rotation, that is, determine the target direction that is after the orientation of the sound signal processing array changes.

Fourth step: Prompt the user to determine the target direction that is after the orientation of the sound signal processing array changes that is determined in the third step; the user inputs the direction indication information used for indicating the target direction that is after the orientation of the sound signal processing array changes; and the mobile phone adjusts a beam direction of the microphone array according to the direction indication information; and certainly, the mobile phone may not require determining of the user after the mobile phone determines the target direction, and directly adjust the beam direction of the microphone array according to the target direction.

According to the sound signal processing method provided by this embodiment, in a case in which a user changes an orientation of a sound signal processing array, the change of the orientation is sensed, a target direction that is after the orientation of the sound signal processing array changes is determined according to the orientation variation, and a sound signal is processed according to the target direction that is after the orientation of the sound signal processing array changes, so that a sound signal can still be accurately processed in a noisy environment, thereby achieving an enhancement effect for the processed sound signal.

Further, the control mode selected by the user is a scan mode, where the scan mode is a mode in which the user is prompted by means of scanning to input the direction indication information; and before the receiving the direction indication information that is input by the user in a direction indication information input manner corresponding to the selected control mode, the method further includes: collecting by means of scanning sound signals in at least two directions; analyzing energy of the sound signals, and determining a sound source direction of a sound signal with maximum energy; and prompting the user to input, according to the sound source direction, the direction indication information.

An example in which the sound signal processing array is a microphone array, and sound signal processing units of the microphone array are linearly arranged is used, and a specific implementation manner may include:

First step: The microphone array collects multiple sound signals in multiple directions. Resolution $\Delta$ may be set according to a requirement, and the resolution $\Delta$ is used for denoting a width of a beam of the sound signal processing array. If the resolution $\Delta$ is 30°, the linearly arranged sound signal processing units collect, in a range of 180° that the sound signal processing units can be oriented to, sound signals uniformly distributed in 6 directions, and then can collect all sound signals within the range of 180°. When a sound signal in a direction is collected, a beam may be kept pointing to the direction for a time, for example, 500 ms.

Second step: Analyze the multiple collected sound signals in the multiple directions. For example, 20 ms is used as one frame to calculate energy of a sound signal. Sound signals of 500 ms collected in each direction corresponds to 25 frames of sound signals; an average value of energy of 25 frames of sound signals in one direction is calculated; average values of energy of sound signals in all the 6 directions are successively calculated; and it is determined that a direction with a maximum average value of energy is a target direction.

Third step: Prompt the user to input direction indication information according to the target direction determined in the second step.

Fourth step: Adjust the beam direction of the sound signal processing array according to the direction indication information.

According to the sound signal processing method provided by this embodiment, a target direction is acquired by collecting and analyzing sound signals in multiple directions, a user is prompted to input corresponding direction indication information used for indicating the target direction, and a sound signal is processed according to the direction indication information, so that a sound signal can still be accurately processed in a noisy environment, thereby achieving an enhancement effect for the processed sound signal.

According to the sound signal processing method in this embodiment of the present invention, the control mode may further include modes of other different types besides the foregoing mode for the user to select, which aims to providing multiple different options including the user autonomous control mode and the scan mode for the user, so as to implement multiple manners of processing on the sound signal, and increase use convenience for the user at the same time.

Further, the receiving direction indication information input by a user and used for indicating a target direction may further include: receiving the direction indication information input by the user by using a knob and used for indicating the target direction. The knob may be a physical knob disposed on a device for controlling the sound signal processing array, and may also be a knob in a software form on the device for controlling the sound signal processing array, which is not limited in the present invention. A manner of inputting a direction indication by using a knob is used, which enriches an implementation manner of controlling the beam direction of the sound signal processing array by the user.

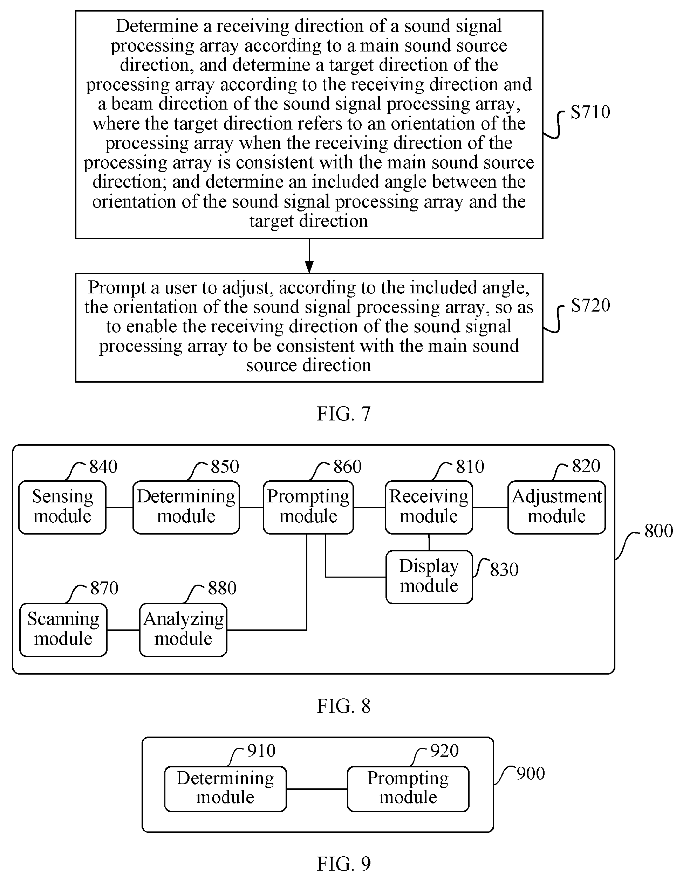

FIG. 7 is a flowchart of Embodiment 7 of a sound signal processing method according to the present invention. As shown in FIG. 7, the sound signal processing method provided by this embodiment may include:

S710: Determine a receiving direction of a sound signal processing array according to a main sound source direction, and determine a target direction of the processing array according to the receiving direction and a beam direction of the sound signal processing array, where the target direction refers to an orientation of the processing array when the receiving direction of the processing array is consistent with the main sound source direction; and determine an included angle between the orientation of the sound signal processing array and the target direction.

S720: Prompt a user to adjust, according to the included angle, the orientation of the sound signal processing array, so as to enable the receiving direction of the sound signal processing array to be consistent with the main sound source direction.

According to the sound signal processing method provided by this embodiment, in a case in which a beam direction of a sound signal processing array is fixed, a user may be prompted, according to a main sound source direction, to adjust a receiving direction of the sound signal processing array, so as to achieve an enhancement effect for a processed sound signal.

A specific implementation manner of the embodiment shown in FIG. 7 may include:

First step: Fix a beam direction of a microphone array, that is, keep the beam direction of the microphone array unchanged relative to the microphone array itself. FIG. 2 is used as an example, that is, β keeps unchanged, and a manner of fixing the beam direction of the microphone array may use a software control manner, and may also a hardware manner for fixing. For example, a directional microphone array, such as a heart-shaped microphone, is selected, where the heart-shaped microphone has a good effect of collecting a sound signal in a direction. A used form for fixing the beam direction of the microphone array is not limited in the present invention.

Second step: Determine a target direction in an adaptive manner, and obtain, according to an included angle between the target direction and the fixed beam direction of the microphone array, an angle by which an orientation of the microphone array needs to be adjusted.

Third step: Prompt the user to input direction indication information according to the target direction, that is, prompt the user to adjust the orientation of the microphone array, where an angle by which the user is advised to adjust the microphone array is provided in the prompt.

Fourth step: The user adjusts the orientation of the microphone array according to the prompt, for example, if the microphone array is disposed in a mobile phone, the user may rotate the mobile phone by a corresponding angle according to a prompt provided by the mobile phone, so that the beam direction of the microphone array in the mobile phone is orientated to the target direction. According to the sound signal processing method provided by this embodiment, in a case in which a beam direction of a sound signal processing array is fixed, a user may be prompted, according to a target direction, to adjust an orientation of the sound signal processing array, so as to achieve an enhancement effect for a processed sound signal.

FIG. 8 is a schematic structural diagram of Embodiment 1 of a sound signal processing device according to the present invention. As shown in FIG. 8, the sound signal processing device 800 provided by this embodiment may include: a receiving module 810, an adjustment module 820, a display module 830, a sensing module 840, a determining module 850, a prompting module 860, a scanning module 870, and an analyzing module 880. Specifically:

The receiving module 810 is configured to receive direction indication information input by a user and used for indicating a target direction.

The adjustment module 820 is configured to adjust, according to the direction indication information, a beam direction of a sound signal processing array to a state corresponding to the target direction.

Further, the adjustment module 820 is specifically configured to determine, according to the direction indication information, a signal delay corresponding to each sound signal processing unit in the sound signal processing array; and perform, according to each signal delay, delayed processing on a sound signal that needs to be processed by the sound signal processing unit corresponding to the signal delay, to acquire the sound signal on which the delayed processing has been performed, and transmit the sound signal on which the delayed processing has been performed to a beamformer, so as to adjust the beam direction of the sound signal processing array to the state corresponding to the target direction.

Further, the adjustment module 820 is specifically configured to:

acquire, according to the direction indication information by using the following formula, a signal delay $\tau_n(\beta)$ corresponding to each sound processing unit n in the sound signal processing array:

$$\tau_n(\beta) = \frac{d_n \cos\beta}{c} \times f_s$$

where $d_n$ denotes a distance between one sound signal processing unit n in sound signal processing units that are linearly arranged and included in the sound signal processing array and the center of the sound signal processing array, $\beta$ denotes an approximate included angle between the target direction, to which the center of the sound signal processing array points, indicated by the direction indication information and a reference coordinate, c denotes a speed of sound, and $f_s$ denotes a sound signal sampling frequency of the sound signal processing array; and perform, according to the signal delay $\tau_n(\beta)$ corresponding to the sound signal processing unit n, delayed processing on a sound signal collected by the sound signal processing unit n, where the sound signal on which the delayed processing has been performed may be expressed as:

$$Y_n(\omega, \beta) = \overline{Y}_n(\omega, \beta) * e^{-j\omega\tau_n(\beta)}$$

where $\overline{Y}_n(\omega,\beta)$ is a frequency domain signal obtained after time-frequency conversion is performed on the sound signal collected by the sound signal processing unit n, and $\omega$ denotes a frequency index.

Further, the adjustment module 820 is specifically configured to:

acquire, according to the direction indication information by using the following formula, a set T or $\psi$ of the signal delays corresponding to the sound processing units in the sound signal processing array:

$$T = [T_1, T_2 ..., T_M] = \left[\frac{r_1 - r_a}{c}f_a, \frac{r_2 - r_a}{c}f_a ..., \frac{r_M - r_a}{c}f_a\right],$$

or

$$\psi = [\psi_1, \psi_2 ..., \psi_M] = \left[e^{-j\frac{2\pi f_a(r_1 - r_a)}{c}}, e^{-j\frac{2\pi f_a(r_2 - r_a)}{c}} ..., e^{-j\frac{2\pi f_a(r_M - r_a)}{c}}\right]$$

where $T_M$ denotes a signal delay corresponding to the $M^{th}$ sound processing unit in the sound processing array, $r_m$ denotes a distance from a target A in the target direction indicated by the direction indication information to the $m^{th}$ sound processing unit, $f_a$ denotes a sound signal sampling frequency of the sound processing array, and c denotes a speed of sound;
$r_m$ is acquired by using the following formula:

$$r_m = \sqrt{r_a{}^2 + b^2 - 2br_a \sin\theta\cos a_m}, m = 1, 2 ..., M$$

where $r_a$ denotes a distance between the target A in the target direction indicated by the direction indication information and an origin of a reference coordinate, the origin of the reference coordinate is a circle center of the sound processing array that is annularly arranged, b denotes a radius of the sound processing array that is annularly and uniformly arranged, and $a_m$ denotes an included angle between a connection line between a projection A' of the target A on a plane on which the sound processing array is located and the origin and a connection line between the $m^{th}$ sound processing unit and the origin; and

$a_m$ is acquired by using the following formula:

$$a_m = a_1 + \frac{2\pi(m-1)}{M}, m = 1, 2 \dots, M$$

where $a_1$ denotes an included angle between the connection line between the projection A' of the target A on the plane on which the sound processing array is located and the origin and a connection line between the first sound processing unit and the origin; and perform, according to a signal delay $T_M$ or $\psi_M$ in the set T or $\psi$ of the signal delays, delayed processing on a corresponding sound signal collected by the sound signal processing unit M, where the sound signal on which the delayed processing has been performed may be expressed as:

$$Y_M(\omega, \beta) = \overline{Y}_M(\omega, \beta) * e^{-j\omega T_M},$$

or

$$Y_M(\omega, \beta) = \overline{Y}_M(\omega, \beta) * e^{-j\omega \psi_M}$$

where $\overline{Y}_n(\omega, \beta)$ is a frequency domain signal obtained after time-frequency conversion is performed on a sound signal collected by a sound signal processing unit n, and $\omega$ denotes a frequency index.

Further, the sound signal processing array includes a sound signal collection array, where the sound signal collection array includes multiple sound signal collection units; and the adjustment module 820 is specifically configured to determine, according to the direction indication information, a signal delay corresponding to each sound signal collection unit in the sound signal collection array; and perform, according to each signal delay, delayed processing on a sound signal collected by the sound signal collection unit corresponding to the signal delay. Alternatively, the sound signal processing array includes a sound signal sending array, where the sound signal sending array includes multiple sound signal sending units; and correspondingly, the adjustment module 820 is specifically configured to determine, according to the direction indication information, a signal delay corresponding to each sound signal sending unit in the sound signal sending array; and perform, according to each signal delay, delayed processing on a sound signal sent by the sound signal sending unit corresponding to the signal delay.

Further, the receiving module 810 is further configured to receive a control mode display instruction input by the user; the display module 830 is configured to acquire multiple available control modes and display the multiple available control modes to the user according to the control mode display instruction, where each control mode in the multiple control modes corresponds to at least one direction indication information input manner; and the receiving module 810 is further configured to receive a control mode selection instruction for the multiple control modes that is sent by the user, and enable a control mode selected by the user; and receive the direction indication information that is input by the user in a direction indication information input manner corresponding to the selected control mode and that is used for indicating the target direction.

Further, the multiple control modes include a user autonomous control mode, where the user autonomous control mode is a mode in which a user is allowed to autonomously input the direction indication information; and if the control mode selected by the user is the user autonomous control mode, the receiving module 810 is specifically configured to receive a voice signal that is input by the user in a voice input manner, and parse the voice signal to acquire direction indication information included in the voice signal; or, the receiving module 810 is specifically configured to receive track information that is input by means of sliding by the user on a touch screen in a touch input manner, parse a target direction indicated by the track information, and generate direction indication information used for indicating the target direction; or, the receiving module 810 is specifically configured to receive gesture image information that is input by means of projection by the user by using a projection screen, parse a target direction indicated by the gesture image information, and generate direction indication information used for indicating the target direction; or, the receiving module 810 is specifically configured to receive a control instruction that is input by the user by using an instruction input terminal apparatus corresponding to the selected control mode and that is used for indicating a target direction, where the control instruction used for indicating the target direction includes direction indication information used for indicating the target direction; or, the receiving module 810 is specifically configured to receive scrolling information that is input by the user by using a keyboard scroll wheel corresponding to the selected control mode, where the scrolling information includes direction indication information used for indicating a target direction.

Further, if the manner indication information input manner corresponding to the control mode selected by the user is a touch input manner, the receiving module 810 is specifically configured to receive information about one track that is input by means of sliding by the user on the touch screen; and determine, according to start point position information and end point position information, which are included in the information about the one track, of the sliding input on the touch screen, a target direction indicated by the sliding input, and generate direction indication information used for indicating the target direction. Alternatively, the receiving module 810 is specifically configured to receive information about two tracks that are input by means of sliding by the user on the touch screen; and separately determine, according to start point position information and end point position information, which are included in the information about the two tracks, of the sliding input on the touch screen, extension directions of the two tracks; and determine, according to an angle range limited by the extension directions of the two tracks, a target direction indicated by the sliding input, and generate direction indication information used for indicating the target direction. Further, the receiving module 810 is specifically configured to determine, according to the extension directions of the two tracks, an extension direction of an angle bisector of an included angle formed by the two tracks; and determine, according to the extension direction of the angle bisector, that the target direction indicated by the sliding input is within a first angle range, where the first angle range uses the extension direction of the angle bisector as a center, and uses a half of a degree of the included angle formed by the two tracks as a main lobe width.

Further, the sensing module 840 is configured to sense that an orientation of the sound signal processing array changes, and determine an orientation variation; the determining module 850 is configured to determine, according to the orientation variation and a target direction that is before the orientation of the sound signal processing array changes, a target direction that is after the orientation of the sound signal processing array changes; and the prompting module 860 is configured to prompt the user to input the direction indication information used for indicating the target direction that is after the orientation changes.

Further, the control mode selected by the user is a scan mode, where the scan mode is a mode in which the user is prompted by means of scanning to input the direction indication information; and correspondingly, the scanning module 870 is configured to collect by means of scanning sound signals in at least two directions; the analyzing module 880 is configured to analyze energy of the sound signals, and determine a sound source direction of a sound signal with maximum energy; and the prompting module 860 is further configured to prompt the user to input, according to the sound source direction, the direction indication information.

The foregoing implementation manner of the sound signal processing device 800 provided by this embodiment may be used to perform the technical solution in the method embodiment shown in any one of FIG. 1 to FIG. 6; and implementation principles and technical effects thereof are similar, and details are not provided herein again.

FIG. 9 is a schematic structural diagram of Embodiment 2 of a sound signal processing device according to the present invention. As shown in FIG. 9, the sound signal processing device 900 provided by this embodiment may include:

a determining module 910, configured to determine a receiving direction of a sound signal processing array according to a main sound source direction, and determine a target direction of the processing array according to the receiving direction and a beam direction of the sound signal processing array, where the target direction refers to an orientation of the processing array when the receiving direction of the processing array is consistent with the main sound source direction; and determine an included angle between the orientation of the sound signal processing array and the target direction; and a prompting module 920, configured to prompt a user to adjust, according to the included angle, the orientation of the sound signal processing array, so as to enable the receiving direction of the sound signal processing array to be consistent with the main sound source direction.

The foregoing implementation manner of the sound signal processing device 900 provided by this embodiment may be used to perform the technical solution in the method embodiment shown in FIG. 7; and implementation principles and technical effects thereof are similar, and details are not provided herein again.

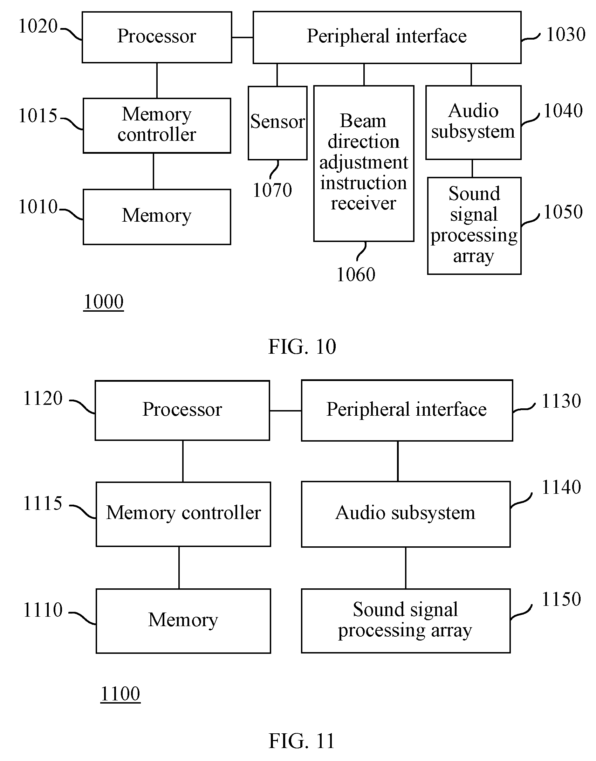

FIG. 10 is a schematic structural diagram of Embodiment 3 of a sound signal processing device according to the present invention. As shown in FIG. 10, the sound signal processing device 1000 provided by this embodiment may include:

a memory 1010, a memory controller 1015, a processor 1020, a peripheral interface 1030, an audio subsystem 1040, a sound signal processing array 1050, a beam direction adjustment instruction receiver 1060, a sensor 1070, and the like.

The processor 1020 may be a central processing unit (Central Processing Unit, CPU for short).

The memory 1010 may include a high speed random access memory, a non-volatile solid storage device, and the like.

The memory controller 1015 may control access by other components, such as a processor, of the sound signal processing device 1000 to the memory 1010, so as to invoke each module in the memory 1010 to perform a corresponding function.

The sound signal processing array 1050 may be a microphone array or a loudspeaker array. Specifically:

The beam direction adjustment instruction receiver 1060 may be configured to receive direction indication information input by a user and used for indicating a target direction.

The processor 1020 may be configured to adjust, according to the direction indication information, a beam direction of a sound signal processing array to a state corresponding to the target direction.

Further, the processor 1020 is specifically configured to determine, according to the direction indication information, a signal delay corresponding to each sound signal processing unit in the sound signal processing array; and perform, according to each signal delay, delayed processing on a sound signal that needs to be processed by the sound signal processing unit corresponding to the signal delay, to acquire the sound signal on which the delayed processing has been performed, and transmit the sound signal on which the delayed processing has been performed to a beamformer, so as to adjust the beam direction of the sound signal processing array to the state corresponding to the target direction.

Further, the processor 1020 is specifically configured to:

acquire, according to the direction indication information by using the following formula, a signal delay $\tau_n(\beta)$ corresponding to each sound processing unit n in the sound signal processing array:

$$\tau_n(\beta) = \frac{d_n \cos\beta}{c} \times f_s$$

where $d_n$ denotes a distance between one sound signal processing unit n in sound signal processing units that are linearly arranged and included in the sound signal processing array and the center of the sound signal processing array, $\beta$ denotes an approximate included angle between the target direction, to which the center of the sound signal processing array points, indicated by the direction indication information and a reference coordinate, c denotes a speed of sound, and $f_s$ denotes a sound signal sampling frequency of the sound signal processing array; and perform, according to the signal delay $\tau_n(\beta)$ corresponding to the sound signal processing unit n, delayed processing on a sound signal collected by the sound signal processing unit n, where the sound signal on which the delayed processing has been performed may be expressed as:

$$Y_n(\omega, \beta) = \overline{Y}_n(\omega, \beta) * e^{-j\omega\tau_n(\beta)}$$

where $\overline{Y}_n(\omega,\beta)$ is a frequency domain signal obtained after time-frequency conversion is performed on the sound signal collected by the sound signal processing unit n, and $\omega$ denotes a frequency index.

Further, the processor 1020 is specifically configured to:

acquire, according to the direction indication information by using the following formula, a set T or $\psi$ of the signal delays corresponding to the sound processing units in the sound signal processing array:

$$T = [T_1, T_2 \ldots, T_M] = \left[ \frac{r_1 - r_a}{c} f_a, \frac{r_2 - r_a}{c} f_a \ldots, \frac{r_M - r_a}{c} f_a \right],$$

or

$$\psi = [\psi_1, \psi_2 \ldots, \psi_M] = \left[ e^{-j\frac{2\pi f_a(r_1 - r_a)}{c}}, e^{-j\frac{2\pi f_a(r_2 - r_a)}{c}} \ldots, e^{-j\frac{2\pi f_a(r_M - r_a)}{c}} \right]$$

where $T_M$ denotes a signal delay corresponding to the $M^{th}$ sound processing unit in the sound processing array, $r_m$ denotes a distance from a target A in the target direction indicated by the direction indication information to the $m^{th}$ sound processing unit, $f_a$ denotes a sound signal sampling frequency of the sound processing array, and c denotes a speed of sound;

$r_m$ is acquired by using the following formula:

$$r_m = \sqrt{r_a{}^2 + b^2 - 2br_a \sin\theta\cos a_m}, m = 1, 2 \ldots, M$$

where $r_a$ denotes a distance between the target A in the target direction indicated by the direction indication information and an origin of a reference coordinate, the origin of the reference coordinate is a circle center of the sound processing array that is annularly arranged, b denotes a radius of the sound processing array that is annularly and uniformly arranged, and $a_m$ denotes an included angle between a connection line between a projection A' of the target A on a plane on which the sound processing array is located and the origin and a connection line between the $m^{th}$ sound processing unit and the origin; and

$a_m$ is acquired by using the following formula:

$$a_m = a_1 + \frac{2\pi(m-1)}{M}, m = 1, 2 \ldots, M$$

where $a_1$ denotes an included angle between the connection line between the projection A' of the target A on the plane on which the sound processing array is located and the origin and a connection line between the first sound processing unit and the origin; and perform, according to a signal delay $T_M$ or $\psi_M$ in the set T or $\psi$ of the signal delays, delayed processing on a corresponding sound signal collected by the sound signal processing unit M, where the sound signal on which the delayed processing has been performed may be expressed as:

$$Y_M(\omega, \beta) = \overline{Y}_M(\omega, \beta) * e^{-j\omega T_M},$$

or

$$Y_M(\omega, \beta) = \overline{Y}_M(\omega, \beta) * e^{-j\omega\psi_M}$$

where $\overline{Y}_n(\omega, \beta)$ is a frequency domain signal obtained after time-frequency conversion is performed on a sound signal collected by a sound signal processing unit n, and $\omega$ denotes a frequency index.

Further, the sound signal processing array includes a sound signal collection array, where the sound signal collection array includes multiple sound signal collection units; and the processor 1020 is specifically configured to determine, according to the direction indication information, a signal delay corresponding to each sound signal collection unit in the sound signal collection array; and perform, according to each signal delay, delayed processing on a sound signal collected by the sound signal collection unit corresponding to the signal delay. Alternatively, the sound signal processing array includes a sound signal sending array, where the sound signal sending array includes multiple sound signal sending units; and correspondingly, the processor 1020 is specifically configured to determine, according to the direction indication information, a signal delay corresponding to each sound signal sending unit in the sound signal sending array; and perform, according to each signal delay, delayed processing on a sound signal sent by the sound signal sending unit corresponding to the signal delay.

Further, the beam direction adjustment instruction receiver 1060 is further configured to receive a control mode display instruction input by the user; the processor 1020 is further configured to acquire multiple available control modes and display the multiple available control modes to the user according to the control mode display instruction, where each control mode in the multiple control modes corresponds to at least one direction indication information input manner;

and the beam direction adjustment instruction receiver 1060 is further configured to receive a control mode selection instruction for the multiple control modes that is sent by the user, and enable a control mode selected by the user; and receive the direction indication information that is input by the user in a direction indication information input manner corresponding to the selected control mode and that is used for indicating the target direction.

Further, the multiple control modes include a user autonomous control mode, where the user autonomous control mode is a mode in which a user is allowed to autonomously input the direction indication information; and if the control mode selected by the user is the user autonomous control mode, the beam direction adjustment instruction receiver 1060 is specifically configured to receive a voice signal that is input by the user in a voice input manner, and parse the voice signal to acquire direction indication information included in the voice signal; or, the beam direction adjustment instruction receiver 1060 is specifically configured to receive track information that is input by means of sliding by the user on a touch screen in a touch input manner, parse a target direction indicated by the track information, and generate direction indication information used for indicating the target direction; or, the beam direction adjustment instruction receiver 1060 is specifically configured to receive gesture image information that is input by means of projection by the user by using a projection screen, parse a target direction indicated by the gesture image information, and generate direction indication information used for indicating the target direction; or, the beam direction adjustment instruction receiver 1060 is specifically configured to receive a control instruction that is input by the user by using an instruction input terminal apparatus corresponding to the selected control mode and that is used for indicating a target direction, where the control instruction used for indicating the target direction includes direction indication information used for indicating the target direction; or, the beam direction adjustment instruction receiver 1060 is specifically configured to receive scrolling information that is input by the user by using a keyboard scroll wheel corresponding to the selected control mode, where the scrolling information includes direction indication information used for indicating a target direction.

Further, if the manner indication information input manner corresponding to the control mode selected by the user is a touch input manner, the beam direction adjustment instruction receiver 1060 is specifically configured to receive information about one track that is input by means of sliding by the user on the touch screen; and determine, according to start point position information and end point position information, which are included in the information about the one track, of the sliding input on the touch screen, a target direction indicated by the sliding input, and generate direction indication information used for indicating the target direction. Alternatively, the beam direction adjustment instruction receiver 1060 is specifically configured to receive information about two tracks that are input by means of sliding by the user on the touch screen; and separately determine, according to start point position information and end point position information, which are included in the information about the two tracks, of the sliding input on the touch screen, extension directions of the two tracks; and determine, according to an angle range limited by the extension directions of the two tracks, a target direction indicated by the sliding input, and generate direction indication information used for indicating the target direction.

Optionally, the beam direction adjustment instruction receiver 1060 is specifically configured to determine, according to the extension directions of the two tracks, an extension direction of an angle bisector of an included angle formed by the two tracks; and determine, according to the extension direction of the angle bisector, that the target direction indicated by the sliding input is within a first angle range, where the first angle range uses the extension direction of the angle bisector as a center, and uses a half of a degree of the included angle formed by the two tracks as a main lobe width.

Optionally, the sensor 1070 is configured to sense that an orientation of the sound signal processing array changes, and determine an orientation variation; and the processor 1020 is configured to determine, according to the orientation variation and a target direction that is before the orientation of the sound signal processing array changes, a target direction that is after the orientation of the sound signal processing array changes; and prompt the user to input the direction indication information used for indicating the target direction that is after the orientation changes.

Optionally, the control mode selected by the user is a scan mode, where the scan mode is a mode in which the user is prompted by means of scanning to input the direction indication information; and correspondingly, the sound signal processing array 1050 is configured to collect by means of scanning sound signals in at least two directions; the processor 1020 is further configured to analyze energy of the sound signals, determine a sound source direction of a sound signal with maximum energy, and prompt the user to input, according to the sound source direction, the direction indication information.

The foregoing implementation manner of the sound signal processing device 1000 provided by this embodiment may be used to perform the technical solution in any one of the method embodiments shown in FIG. 1 to FIG. 6; and implementation principles and technical effects thereof are similar, and details are not provided herein again.

FIG. 11 is a schematic structural diagram of Embodiment 4 of a sound signal processing device according to the present invention. As shown in FIG. 11, the sound signal processing device 1100 provided by this embodiment may include:

a memory 1110, a memory controller 1115, a processor 1120, a peripheral interface 1130, an audio subsystem 1140, a sound signal processing array 1150, and the like.

The processor 1120 may be a central processing unit CPU.

The memory 1110 may include a high speed random access memory, a non-volatile solid storage device, and the like.

The memory controller 1115 may control access by other components, such as a processor, of the sound signal processing device 1100 to the memory 1110, so as to invoke each module in the memory 1110 to perform a corresponding function.

The sound signal processing array 1150 may be a microphone array or a loudspeaker array. Specifically:

The processor 1120 is configured to determine a receiving direction of a sound signal processing array according to a main sound source direction, and determine a target direction of the processing array according to the receiving direction and a beam direction of the sound signal processing array, where the target direction refers to an orientation of the processing array when the receiving direction of the processing array is consistent with the main sound source direction; and determine an included angle between the orientation of the sound signal processing array and the target direction; and prompt a user to adjust, according to the included angle, the orientation of the sound signal processing array, so as to enable the receiving direction of the sound signal processing array to be consistent with the main sound source direction.

The foregoing implementation manner of the sound signal processing device 1100 provided by this embodiment may be used to perform the technical solution in the method embodiment shown in FIG. 7; and implementation principles and technical effects thereof are similar, and details are not provided herein again.

To sum up, according to the sound signal processing method and device provided by the embodiments of the present invention, a beam direction of a sound signal processing array can be adjusted according to a direction indication provided by a user and used for indicating a target direction, so that a sound signal can still be accurately processed in a noisy environment, thereby achieving an enhancement effect for the processed sound signal.

Persons of ordinary skill in the art may understand that all or some of the steps of the method embodiments may be implemented by a program instructing relevant hardware. The program may be stored in a computer-readable storage medium. When the program runs, the steps of the method embodiments are performed. The foregoing storage medium includes: any medium that can store program code, such as a ROM, a RAM, a magnetic disc, or an optical disc.

Finally, it should be noted that the foregoing embodiments are merely intended for describing the technical solutions of the present invention, rather than limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, as long as such modifications or replacements do not cause the essence of corresponding technical solutions to depart from the scope of the technical solutions of the embodiments of the present invention.

## Claims

1. A sound signal processing method, comprising:

   receiving direction indication information input by a user and used for indicating a target direction; and
   adjusting, according to the direction indication information, a beam direction of a sound signal processing array to a state corresponding to the target direction.

2. The method according to claim 1, wherein the adjusting, according to the direction indication information, a beam direction of a sound signal processing array to a state corresponding to the target direction comprises:

   determining, according to the direction indication information, a signal delay corresponding to each sound signal processing unit in the sound signal processing array; and
   performing, according to each signal delay, delayed processing on a sound signal that needs to be processed by the sound signal processing unit corresponding to the signal delay, to acquire the sound signal on which the delayed processing has been performed, and transmitting the sound signal on which the delayed processing has been performed to a beamformer, so as to adjust the beam direction of the sound signal processing array to the state corresponding to the target direction.

3. The method according to claim 2, wherein the determining, according to the direction indication information, a signal delay corresponding to each sound signal processing unit in the sound signal processing array specifically comprises:

acquiring, according to the direction indication information by using the following formula, a signal delay $\tau_n(\beta)$ corresponding to each sound processing unit n in the sound signal processing array:

$$\tau_n(\beta) = \frac{d_n \cos\beta}{c} \times f_s$$

wherein $d_n$ denotes a distance between one sound signal processing unit n in sound signal processing units that are linearly arranged and comprised in the sound signal processing array and the center of the sound signal processing array, $\beta$ denotes an approximate included angle between the target direction, to which the center of the sound signal processing array points, indicated by the direction indication information and a reference coordinate, c denotes a speed of sound, and $f_s$ denotes a sound signal sampling frequency of the sound signal processing array; and

correspondingly, the performing, according to each signal delay, delayed processing on a sound signal that needs to be processed by the sound signal processing unit corresponding to the signal delay, to acquire the sound signal on which the delayed processing has been performed specifically comprises:

performing, according to the signal delay $\tau_n(\beta)$ corresponding to the sound signal processing unit n, delayed processing on a sound signal collected by the sound signal processing unit n, wherein the sound signal on which the delayed processing has been performed may be expressed as:

$$Y_n(\omega,\beta) = \overline{Y}_n(\omega,\beta) * e^{-j\omega\tau_n(\beta)}$$

wherein $\overline{Y}_n(\omega,\beta)$ is a frequency domain signal obtained after time-frequency conversion is performed on the sound signal collected by the sound signal processing unit n, and $\omega$ denotes a frequency index.

4. The method according to claim 2, wherein the determining, according to the direction indication information, a signal delay corresponding to each sound signal processing unit in the sound signal processing array specifically comprises:

acquiring, according to the direction indication information by using the following formula, a set T or $\psi$ of the signal delays corresponding to the sound processing units in the sound signal processing array:

$$T = [T_1, T_2 \ldots, T_M] = \left[\frac{r_1 - r_a}{c} f_a, \frac{r_2 - r_a}{c} f_a \ldots, \frac{r_M - r_a}{c} f_a\right],$$

or

$$\psi = [\psi_1, \psi_2 \ldots, \psi_M] = \left[e^{-j\frac{2\pi f_a(r_1 - r_a)}{c}}, e^{-j\frac{2\pi f_a(r_2 - r_a)}{c}} \ldots, e^{-j\frac{2\pi f_a(r_M - r_a)}{c}}\right]$$

wherein $T_M$ denotes a signal delay corresponding to the $M^{th}$ sound processing unit in the sound processing array, $r_m$ denotes a distance from a target A in the target direction indicated by the direction indication information to the $m^{th}$ sound processing unit, $f_a$ denotes a sound signal sampling frequency of the sound processing array, and c denotes a speed of sound;

$r_m$ is acquired by using the following formula:

$$r_m = \sqrt{r_a^2 + b^2 - 2br_a\sin\theta\cos a_m} \, , m = 1,2\ldots,M$$

wherein $r_a$ denotes a distance between the target A in the target direction indicated by the direction indication information and an origin of a reference coordinate, the origin of the reference coordinate is a circle center of the sound processing array that is annularly arranged, b denotes a radius of the sound processing array that is annularly and uniformly arranged, and $a_m$ denotes an included angle between a connection line between a projection A' of the target A on a plane on which the sound processing array is located and the origin and a connection line between the $m^{th}$ sound processing unit and the origin; and $a_m$ is acquired by using the following formula:

$$a_m = a_1 + \frac{2\pi(m-1)}{M} , m = 1,2\ldots,M$$

wherein $a_1$ denotes an included angle between the connection line between the projection A' of the target A on the plane on which the sound processing array is located and the origin and a connection line between the first sound processing unit and the origin; and

correspondingly, the performing, according to each signal delay, delayed processing on a sound signal that needs to be processed by the sound signal processing unit corresponding to the signal delay, to acquire the sound signal on which the delayed processing has been performed specifically comprises:

performing, according to a signal delay $T_M$ or $\psi_M$ in the set T or $\psi$ of the signal delays, delayed processing on a corresponding sound signal collected by the sound signal processing unit M, wherein the sound signal on which the delayed processing has been performed may be expressed as:

$$Y_M(\omega, \beta) = \overline{Y}_M(\omega, \beta) * e^{-j\omega T_M} \, ,$$

or

$$Y_M(\omega, \beta) = \overline{Y}_M(\omega, \beta) * e^{-j\omega \psi_M}$$

wherein $\overline{Y}_n(\omega,\beta)$ is a frequency domain signal obtained after time-frequency conversion is performed on a sound signal collected by a sound signal processing unit n, and $\omega$ denotes a frequency index.

5. The method according to any one of claims 2 to 4, wherein the sound signal processing array comprises a sound signal collection array, wherein the sound signal collection array comprises multiple sound signal collection units; correspondingly,

the determining, according to the direction indication information, a signal delay corresponding to each sound signal processing unit in the sound signal processing array comprises: determining, according to the direction indication information, a signal delay corresponding to each sound signal collection unit in the sound signal collection array; and correspondingly,

the performing, according to each signal delay, delayed processing on a sound signal that needs to be processed by the sound signal processing unit corresponding to the signal delay comprises: performing, according to each signal delay, delayed processing on a sound signal collected by the sound signal collection unit corresponding to the signal delay;

or,

the sound signal processing array comprises a sound signal sending array, wherein the sound signal sending array comprises multiple sound signal sending units; correspondingly,

the determining, according to the direction indication information, a signal delay corresponding to each sound signal processing unit in the sound signal processing array comprises: determining, according to the direction indication information, a signal delay corresponding to each sound signal sending unit in the sound signal sending array; and correspondingly,

the performing, according to each signal delay, delayed processing on a sound signal that needs to be processed by the sound signal processing unit corresponding to the signal delay comprises: performing, according to each signal delay, delayed processing on a sound signal sent by the sound signal sending unit corresponding to the signal delay.

**6.** The method according to any one of claims 1 to 4, before the receiving direction indication information input by a user and used for indicating a target direction, further comprising:

receiving a control mode display instruction input by the user;
acquiring and displaying multiple available control modes according to the control mode display instruction, wherein each control mode in the multiple control modes corresponds to at least one direction indication information input manner; and
receiving a control mode selection instruction for the multiple control modes that is sent by the user, and enabling a control mode selected by the user, wherein
the receiving direction indication information input by a user and used for indicating a target direction comprises:

receiving the direction indication information that is input by the user in a direction indication information input manner corresponding to the selected control mode and that is used for indicating the target direction.

**7.** The method according to claim 6, wherein the multiple control modes comprise a user autonomous control mode, wherein the user autonomous control mode is a mode in which the user is allowed to autonomously input the direction indication information; and if the control mode selected by the user is the user autonomous control mode,
the receiving the direction indication information that is input by the user in a direction indication information input manner corresponding to the selected control mode and that is used for indicating the target direction comprises:

receiving a voice signal that is input by the user in a voice input manner, and parsing the voice signal to acquire direction indication information comprised in the voice signal;
or,
receiving track information that is input by means of sliding by the user on a touch screen in a touch input manner, parsing a target direction indicated by the track information, and generating direction indication information used for indicating the target direction;
or,
receiving gesture image information that is input by means of projection by the user by using a projection screen, parsing a target direction indicated by the gesture image information, and generating direction indication information used for indicating the target direction;
or,
receiving a control instruction that is input by the user by using an instruction input terminal apparatus corresponding to the selected control mode and that is used for indicating a target direction, wherein the control instruction used for indicating the target direction comprises direction indication information used for indicating the target direction;
or,
receiving scrolling information that is input by the user by using a keyboard scroll wheel corresponding to the selected control mode, wherein the scrolling information comprises direction indication information used for indicating a target direction.

**8.** The method according to claim 7, wherein if the manner indication information input manner corresponding to the control mode selected by the user is a touch input manner,
the receiving track information that is input by means of sliding by the user on a touch screen in a touch input manner comprises:

receiving information about one track that is input by means of sliding by the user on the touch screen; and correspondingly, the parsing a target direction indicated by the track information, and generating direction indication information used for indicating the target direction comprises:

determining, according to start point position information and end point position information, which are comprised in the information about the one track, of the sliding input on the touch screen, a target direction indicated by the sliding input, and generating direction indication information used for indicating the target direction;

or,

the receiving track information that is input by means of sliding by the user on a touch screen in a touch input manner comprises:

receiving information about two tracks that are input by means of sliding by the user on the touch screen; and

correspondingly, the parsing a target direction indicated by the track information, and generating direction indication information used for indicating the target direction comprises:

separately determining, according to start point position information and end point position information, which are comprised in the information about the two tracks, of the sliding input on the touch screen, extension directions of the two tracks; and determining, according to an angle range limited by the extension directions of the two tracks, a target direction indicated by the sliding input, and generating direction indication information used for indicating the target direction.

9. The method according to claim 8, wherein the determining, according to an angle range limited by the extension directions of the two tracks, a target direction indicated by the sliding input comprises:

determining, according to the extension directions of the two tracks, an extension direction of an angle bisector of an included angle formed by the two tracks; and

determining, according to the extension direction of the angle bisector, that the target direction indicated by the sliding input is within a first angle range, wherein the first angle range uses the extension direction of the angle bisector as a center, and uses a half of a degree of the included angle formed by the two tracks as a main lobe width.

10. The method according to any one of claims 1 to 9, before the receiving direction indication information input by a user and used for indicating a target direction, further comprising:

sensing that an orientation of the sound signal processing array changes, and determining an orientation variation;

determining, according to the orientation variation and a target direction that is before the orientation of the sound signal processing array changes, a target direction that is after the orientation of the sound signal processing array changes; and

prompting the user to input the direction indication information used for indicating the target direction that is after the orientation changes.

11. The method according to claim 6, wherein the control mode selected by the user is a scan mode, wherein the scan mode is a mode in which the user is prompted by means of scanning to input the direction indication information; and before the receiving the direction indication information that is input by the user in a direction indication information input manner corresponding to the selected control mode, the method further comprises:

collecting by means of scanning sound signals in at least two directions;

analyzing energy of the sound signals, and determining a sound source direction of a sound signal with maximum energy; and

prompting the user to input, according to the sound source direction, the direction indication information.

12. A sound signal processing method, comprising:

determining a receiving direction of a sound signal processing array according to a main sound source direction, and determining a target direction of the processing array according to the receiving direction and a beam direction of the sound signal processing array, wherein the target direction refers to an orientation of the processing array when the receiving direction of the processing array is consistent with the main sound source direction;

determining an included angle between the orientation of the sound signal processing array and the target direction; and

prompting a user to adjust, according to the included angle, the orientation of the sound signal processing array, so as to enable the receiving direction of the sound signal processing array to be consistent with the main sound source direction.

**13.** A sound signal processing device, comprising:

a receiving module, configured to receive direction indication information input by a user and used for indicating a target direction; and

an adjustment module, configured to adjust, according to the direction indication information, a beam direction of a sound signal processing array to a state corresponding to the target direction.

**14.** The device according to claim 13, wherein the adjustment module is specifically configured to:

determine, according to the direction indication information, a signal delay corresponding to each sound signal processing unit in the sound signal processing array; and

perform, according to each signal delay, delayed processing on a sound signal that needs to be processed by the sound signal processing unit corresponding to the signal delay, to acquire the sound signal on which the delayed processing has been performed, and transmit the sound signal on which the delayed processing has been performed to a beamformer, so as to adjust the beam direction of the sound signal processing array to the state corresponding to the target direction.

**15.** The device according to claim 14, wherein the adjustment module is specifically configured to:

acquire, according to the direction indication information by using the following formula, a signal delay $\tau_n(\beta)$ corresponding to each sound processing unit n in the sound signal processing array:

$$\tau_n(\beta) = \frac{d_n \cos\beta}{c} \times f_s$$

wherein $d_n$ denotes a distance between one sound signal processing unit n in sound signal processing units that are linearly arranged and comprised in the sound signal processing array and the center of the sound signal processing array, $\beta$ denotes an approximate included angle between the target direction, to which the center of the sound signal processing array points, indicated by the direction indication information and a reference coordinate, c denotes a speed of sound, and $f_s$ denotes a sound signal sampling frequency of the sound signal processing array; and

perform, according to the signal delay $\tau_n(\beta)$ corresponding to the sound signal processing unit n, delayed processing on a sound signal collected by the sound signal processing unit n, wherein the sound signal on which the delayed processing has been performed may be expressed as:

$$Y_n(\omega, \beta) = \overline{Y}_n(\omega, \beta) * e^{-j\omega\tau_n(\beta)}$$

wherein $\overline{Y}_n(\omega,\beta)$ is a frequency domain signal obtained after time-frequency conversion is performed on the sound signal collected by the sound signal processing unit n, and $\omega$ denotes a frequency index.

**16.** The device according to claim 14, wherein the adjustment module is specifically configured to:

acquire, according to the direction indication information by using the following formula, a set T or $\psi$ of the signal delays corresponding to the sound processing units in the sound signal processing array:

$$T = [T_1, T_2 \ldots, T_M] = \left[ \frac{r_1 - r_a}{c} f_a, \frac{r_2 - r_a}{c} f_a \ldots, \frac{r_M - r_a}{c} f_a \right],$$

or

$$\psi = [\psi_1, \psi_2 \ldots, \psi_M] = \left[ e^{-j\frac{2\pi f_a (r_1 - r_a)}{c}}, e^{-j\frac{2\pi f_a (r_2 - r_a)}{c}} \ldots, e^{-j\frac{2\pi f_a (r_M - r_a)}{c}} \right]$$

wherein $T_M$ denotes a signal delay corresponding to the $M^{th}$ sound processing unit in the sound processing array, $r_m$ denotes a distance from a target A in the target direction indicated by the direction indication information to the $m^{th}$ sound processing unit, $f_a$ denotes a sound signal sampling frequency of the sound processing array, and c denotes a speed of sound;

$r_m$ is acquired by using the following formula:

$$r_m = \sqrt{r_a^2 + b^2 - 2br_a \sin\theta\cos a_m}, m = 1, 2 \ldots, \ M$$

wherein $r_a$ denotes a distance between the target A in the target direction indicated by the direction indication information and an origin of a reference coordinate, the origin of the reference coordinate is a circle center of the sound processing array that is annularly arranged, b denotes a radius of the sound processing array that is annularly and uniformly arranged, and $a_m$ denotes an included angle between a connection line between a projection A' of the target A on a plane on which the sound processing array is located and the origin and a connection line between the $m^{th}$ sound processing unit and the origin; and

$a_m$ is acquired by using the following formula:

$$a_m = a_1 + \frac{2\pi(m-1)}{M}, m = 1, 2 \ldots, M$$

wherein $a_1$ denotes an included angle between the connection line between the projection A' of the target A on the plane on which the sound processing array is located and the origin and a connection line between the first sound processing unit and the origin; and

perform, according to a signal delay $T_M$ or $\psi_M$ in the set T or $\psi$ of the signal delays, delayed processing on a corresponding sound signal collected by the sound signal processing unit M, wherein the sound signal on which the delayed processing has been performed may be expressed as:

$$Y_M(\omega, \beta) = \overline{Y}_M(\omega, \beta) * e^{-j\omega T_M},$$

or

$$Y_M(\omega, \beta) = \overline{Y}_M(\omega, \beta) * e^{-j\omega \psi_M}$$

wherein $\overline{Y}_n(\omega, \beta)$ is a frequency domain signal obtained after time-frequency conversion is performed on a sound signal collected by a sound signal processing unit n, and $\omega$ denotes a frequency index.

17. The device according to any one of claims 14 to 16, wherein the sound signal processing array comprises a sound signal collection array, wherein the sound signal collection array comprises multiple sound signal collection units; and correspondingly,

the adjustment module is specifically configured to determine, according to the direction indication information, a signal delay corresponding to each sound signal collection unit in the sound signal collection array; and perform, according to each signal delay, delayed processing on a sound signal collected by the sound signal collection unit corresponding to the signal delay;

or,

the sound signal processing array comprises a sound signal sending array, wherein the sound signal sending array comprises multiple sound signal sending units; and correspondingly,

the adjustment module is specifically configured to determine, according to the direction indication information, a signal delay corresponding to each sound signal sending unit in the sound signal sending array; and perform, according to each signal delay, delayed processing on a sound signal sent by the sound signal sending unit corresponding to the signal delay.

18. The device according to any one of claims 13 to 16, wherein

the receiving module is further configured to receive a control mode display instruction input by the user;

the device further comprises: a display module, configured to acquire multiple available control modes and display the multiple available control modes to the user according to the control mode display instruction, wherein each control mode in the multiple control modes corresponds to at least one direction indication information input manner; and

the receiving module is further configured to receive a control mode selection instruction for the multiple control modes that is sent by the user, and enable a control mode selected by the user; and receive the direction indication information that is input by the user in a direction indication information input manner corresponding to the selected control mode and that is used for indicating the target direction.

19. The device according to claim 18, wherein the multiple control modes comprise a user autonomous control mode, wherein the user autonomous control mode is a mode in which the user is allowed to autonomously input the direction indication information; and if the control mode selected by the user is the user autonomous control mode,

the receiving module is specifically configured to receive a voice signal that is input by the user in a voice input manner, and parse the voice signal to acquire direction indication information comprised in the voice signal;

or,

the receiving module is specifically configured to receive track information that is input by means of sliding by the user on a touch screen in a touch input manner, parse a target direction indicated by the track information, and generate direction indication information used for indicating the target direction;

or,

the receiving module is specifically configured to receive gesture image information that is input by means of projection by the user by using a projection screen, parse a target direction indicated by the gesture image information, and generate direction indication information used for indicating the target direction;

or,

the receiving module is specifically configured to receive a control instruction that is input by the user by using an instruction input terminal apparatus corresponding to the selected control mode and that is used for indicating a target direction, wherein the control instruction used for indicating the target direction comprises direction indication information used for indicating the target direction;

or,

the receiving module is specifically configured to receive scrolling information that is input by the user by using a keyboard scroll wheel corresponding to the selected control mode, wherein the scrolling information comprises direction indication information used for indicating a target direction.

20. The device according to claim 19, wherein if the manner indication information input manner corresponding to the control mode selected by the user is a touch input manner,

the receiving module is specifically configured to receive information about one track that is input by means of sliding by the user on the touch screen; and determine, according to start point position information and end point position information, which are comprised in the information about the one track, of the sliding input on the touch screen, a target direction indicated by the sliding input, and generate direction indication information used for indicating the target direction;

or,

the receiving module is specifically configured to receive information about two tracks that are input by means of sliding by the user on the touch screen; and separately determine, according to start point position information and end point position information, which are comprised in the information about the two tracks, of the sliding input on the touch screen, extension directions of the two tracks; and determine, according to an angle range limited by the extension directions of the two tracks, a target direction indicated by the sliding input, and generate direction indication information used for indicating the target direction.

21. The device according to claim 20, wherein the receiving module is specifically configured to:

determine, according to the extension directions of the two tracks, an extension direction of an angle bisector of an included angle formed by the two tracks; and determine, according to the extension direction of the angle bisector, that the target direction indicated by the sliding input is within a first angle range, wherein the first angle range uses the extension direction of the angle bisector as a center, and uses a half of a degree of the included angle formed by the two tracks as a main lobe width.

22. The device according to any one of claims 13 to 21, further comprising:

a sensing module, configured to sense that an orientation of the sound signal processing array changes, and determine an orientation variation;
a determining module, configured to determine, according to the orientation variation and a target direction that is before the orientation of the sound signal processing array changes, a target direction that is after the orientation of the sound signal processing array changes; and
a prompting module, configured to prompt the user to input the direction indication information used for indicating the target direction that is after the orientation changes.

23. The device according to claim 18, wherein the control mode selected by the user is a scan mode, wherein the scan mode is a mode in which the user is prompted by means of scanning to input the direction indication information; and correspondingly, the device further comprises:

a scanning module, configured to collect by means of scanning sound signals in at least two directions; and
an analyzing module, configured to analyze energy of the sound signals, and determine a sound source direction of a sound signal with maximum energy, wherein
the prompting module is further configured to prompt the user to input, according to the sound source direction, the direction indication information.

24. A sound signal processing device, comprising:

a determining module, configured to determine a receiving direction of a sound signal processing array according to a main sound source direction, and determine a target direction of the processing array according to the receiving direction and a beam direction of the sound signal processing array, wherein the target direction refers to an orientation of the processing array when the receiving direction of the processing array is consistent with the main sound source direction; and determine an included angle between the orientation of the sound signal processing array and the target direction; and
a prompting module, configured to prompt a user to adjust, according to the included angle, the orientation of the sound signal processing array, so as to enable the receiving direction of the sound signal processing array to be consistent with the main sound source direction.

Receive direction indication information input by a user and used for indicating a target direction ⟩ ⌠S110

Adjust, according to the direction indication information, a beam direction of a sound signal processing array to a state corresponding to the target direction ⟩ ⌠S120

FIG. 1

FIG. 2

FIG. 3

FIG. 4

A wireless control apparatus establishes a wireless control connection to a receive end — S510

The wireless control apparatus receives a control instruction input by a user and used for indicating a target direction — S520

The wireless control apparatus sends the control instruction to the receive end — S530

The receive end processes a sound signal according to the received control instruction — S540

FIG. 5

A remote control apparatus establishes a connection to a receive end according to a communications protocol by using the Internet — S610

The remote control apparatus receives a control instruction input by a user and used for indicating a target direction — S620

The remote control apparatus sends the control instruction to the receive end — S630

The receive end processes a sound signal according to the received control instruction — S640

FIG. 6

Determine a receiving direction of a sound signal processing array according to a main sound source direction, and determine a target direction of the processing array according to the receiving direction and a beam direction of the sound signal processing array, where the target direction refers to an orientation of the processing array when the receiving direction of the processing array is consistent with the main sound source direction; and determine an included angle between the orientation of the sound signal processing array and the target direction

S710

Prompt a user to adjust, according to the included angle, the orientation of the sound signal processing array, so as to enable the receiving direction of the sound signal processing array to be consistent with the main sound source direction

S720

FIG. 7

840 Sensing module

850 Determining module

860 Prompting module

810 Receiving module

820 Adjustment module

830 Display module

870 Scanning module

880 Analyzing module

800

FIG. 8

910 Determining module

920 Prompting module

900

FIG. 9

1020 — Processor

Peripheral interface — 1030

1015 — Memory controller

Sensor

1070

Beam direction adjustment instruction receiver

1060

Audio subsystem — 1040

Sound signal processing array — 1050

1010 — Memory

1000

FIG. 10

1120 — Processor

Peripheral interface — 1130

1115 — Memory controller

Audio subsystem — 1140

1110 — Memory

Sound signal processing array — 1150

1100

FIG. 11

# INTERNATIONAL SEARCH REPORT

| International application No. |
| --- |
| **PCT/CN2014/073124** |

## A.   CLASSIFICATION OF SUBJECT MATTER

G10L 21/02 (2013.01) i; H04R 3/00 (2006.01) i

According to International Patent Classification (IPC) or to both national classification and IPC

## B.   FIELDS SEARCHED

Minimum documentation searched (classification system followed by classification symbols)

G10L 21/00, 21/02; H04R 3/-; H04R 1/-

Documentation searched other than minimum documentation to the extent that such documents are included in the fields searched

Electronic data base consulted during the international search (name of data base and, where practicable, search terms used)

CNABS, CNTXT, TWTXT, CNKI, DWPI, SIPOABS: array, beam form+, mic+, loudspeaker+, sound, user+, direction, position, angle, delay+

## C.   DOCUMENTS CONSIDERED TO BE RELEVANT

| Category* | Citation of document, with indication, where appropriate, of the relevant passages | Relevant to claim No. |
| --- | --- | --- |
| X | CN 101242677 A (SONY CORPORATION), 13 August 2008 (13.08.2008), description, page 13, paragraph 1 to page 14, penultimate paragraph, page 16, paragraphs 1-3, and page 19, paragraph 2 to page 20, paragraph 6, and figures 4, 5, 6 and 11 | 1-8, 11, 13-20, 23 |
| A | CN 102804806 A (NOKIA CORP.), 28 November 2012 (28.11.2012), the whole document | 1-24 |
| A | CN 102421050 A (SAMSUNG ELECTRONICS CO., LTD.), 18 April 2012 (18.04.2012), the whole document | 1-24 |
| A | CN 1762179 A (1... LIMITED), 19 April 2006 (19.04.2006), the whole document | 1-24 |
| A | WO 2012/061151 A1 (QUALCOMM INCORPORATED), 10 May 2012 (10.05.2012), the whole document | 1-24 |

☐ Further documents are listed in the continuation of Box C.        ☒ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 13 May 2014 (13.05.2014) | **09 July 2014 (09.07.2014)** |

| Name and mailing address of the ISA/CN: <br> State Intellectual Property Office of the P. R. China <br> No. 6, Xitucheng Road, Jimenqiao <br> Haidian District, Beijing 100088, China <br> Facsimile No.: (86-10) 62019451 | Authorized officer <br><br> **WANG, Xinning** <br><br> Telephone No.: (86-10) **010-62413706** |
| --- | --- |

Form PCT/ISA/210 (second sheet) (July 2009)

## INTERNATIONAL SEARCH REPORT
### Information on patent family members

International application No.

**PCT/CN2014/073124**

| Patent Documents referred in the Report | Publication Date | Patent Family | Publication Date |
|---|---|---|---|
| CN 101242677 A | 13.08.2008 | JP 2008193420 A | 21.08.2008 |
| | | US 8184823 B2 | 22.05.2012 |
| | | US 2008187148 A1 | 07.08.2008 |
| | | CN 101242677 B | 04.07.2012 |
| CN 102804806 A | 28.11.2012 | CA 2765116 A1 | 29.12.2010 |
| | | WO 2010149823 A1 | 29.12.2010 |
| | | US 2012163606 A1 | 28.06.2012 |
| | | EP 2446642 A1 | 02.05.2012 |
| CN 102421050 A | 18.04.2012 | KR 20120029839 A | 27.03.2012 |
| | | US 2012070015 A1 | 22.03.2012 |
| | | EP 2431973 A1 | 21.03.2012 |
| CN 1762179 A | 19.04.2006 | WO 2004066673 A1 | 05.08.2004 |
| | | CN 1762179 B | 04.07.2012 |
| | | KR 101 125468 B1 | 27.03.2012 |
| | | JP 4365857 B2 | 18.11.2009 |
| | | JP 2006516373 A | 29.06.2006 |
| | | US 8594350 B2 | 26.11.2013 |
| | | KR 20050095852 A | 04.10.2005 |
| | | US 2006153391 A1 | 13.07.2006 |
| | | AT 425641 T | 15.03.2009 |
| | | EP 1584217 A1 | 12.10.2005 |
| | | EP 158421781 | 11.03.2009 |
| WO 2012/061151 A1 | 10.05.2012 | KR 20130114166 A | 16 10.2013 |
| | | US 2012128175 A1 | 24.05.2012 |
| | | JP 2014502439 A | 30.01.2014 |
| | | CN 103189921 A | 03.07.2013 |
| | | EP 2633699 A1 | 04.09.2013 |
| | | WO 2012061149 A1 | 10.05.2012 |
| | | WO 2012061148 A1 | 10.05.2012 |
| | | US 2012128160 A1 | 24.05.2012 |
| | | US 2012128166 A1 | 24.05.2012 |
| | | CN 103181192 A | 26.06.2013 |
| | | CN 103190158 A | 03.07.2013 |
| | | EP 2633698 A1 | 04.09.2013 |
| | | EP 2633697 A1 | 04.09.2013 |
| | | KR 20130114162 A | 16.10.2013 |
| | | KR 20130116271 A | 23.10.2013 |
| | | JP 2014501064 A | 16.01.2014 |
| | | JP 2013546253 A | 26.12.2013 |

Form PCT/ISA/210 (patent family annex) (July 2009)